# EUROPEAN PATENT SPECIFICATION

(11) **EP 3 683 533 B1**
(45) Date of publication and mention of the grant of the patent: **10.04.2024**
(21) Application number: 18857262.2
(22) Date of filing: 16.08.2018
(51) Int. Cl.: F28D 20/00, F28D 20/02, F24D 19/10

(54) **HEAT STORAGE DEVICE, HEAT STORAGE SYSTEM, AND HEAT STORAGE METHOD**
WÄRMESPEICHERVORRICHTUNG, WÄRMESPEICHERANLAGE UND WÄRMESPEICHERVERFAHREN
DISPOSITIF DE STOCKAGE DE CHALEUR, SYSTÈME DE STOCKAGE DE CHALEUR ET PROCÉDÉ DE STOCKAGE DE CHALEUR

(30) Priority: 13.09.2017 JP 2017175409
(43) Date of publication of application: 22.07.2020
(73) Proprietor: Mitsubishi Electric Corporation, Chiyoda-ku Tokyo 100-8310 (JP)
(72) Inventor: SUZUKI, Shunkei, Tokyo 100-8310 (JP); IPPOSHI, Shigetoshi, Tokyo 100-8310 (JP); YONEDA, Norihiro, Tokyo 100-8310 (JP); USUDA, Yuichi, Tokyo 100-8310 (JP); MARUYAMA, Seiji, Tokyo 100-8310 (JP); YAJI, Yoshikazu, Tokyo 100-8310 (JP); NOMURA, Yasumitsu, Tokyo 100-8310 (JP); NAKAZONO, Junichi, Tokyo 100-8310 (JP)
(74) Representative: Meissner Bolte Partnerschaft mbB
(86) International application number: PCT/JP2018/030444
(87) International publication number: WO 2019/054120

(56) References cited:
- EP-A1- 3 196 558
- EP-A1- 3 470 744
- EP-A2- 2 416 073
- DE-A1-102009 004 294
- GB-A- 2 483 362
- JP-A- H0 588 715
- JP-A- H0 989 546
- JP-A- H06 313 605
- JP-A- H10 300 167
- JP-A- S60 251 336
- JP-A- 2001 132 989
- JP-A- 2003 166 752
- JP-A- 2009 192 135
- JP-A- 2010 007 882
- JP-A- 2010 175 199
- JP-A- 2011 237 148
- JP-A- 2012 083 043
- JP-A- 2012 184 922
- JP-A- 2016 061 512
- JP-U- S59 144 377
- US-A1- 2012 235 478
- US-A1- 2013 145 786

## Description

### Technical Field

The present invention relates to a heat storage apparatus configured to store thermal energy, a heat storage system using the heat storage apparatus, and a heat storage method.

### Background Art

Hitherto, there has been known a heat storage apparatus configured to store thermal energy. For example, a heat storage apparatus includes, in a tank, a heat storage material that can temporarily store heat and allow the stored heat to be used when required. A user gives heat to the heat storage material to allow the heat storage material to store the heat or removes and extracts heat from a heat conductive surface of the heat storage material, to thereby enable the heat storage material to be used for heat exchange. For example, the user uses the heat storage apparatus to close a time gap between a demand and a supply of thermal energy via heat exchange.

When a demand amount of thermal energy exceeds a supply amount of thermal energy, a thermal energy shortage may occur in the heat storage apparatus. To prevent this, there is proposed a heat storage system configured to predict the demand amount of thermal energy, activate a heat source machine when determining that an energy shortage may occur, and generate thermal energy to add the thermal energy (see, for example, Patent Literature 1).
Patent Literature 2-9 relate to prior art considered relevant for the background of the present invention, and are briefly summarised below.
PTL 2 relates to a heating device comprising a buffer storage and a method involving controlling and regulating a heat generator and a pump by a measuring and controlling unit.
PTL 3 relates to electrical heat pump systems where the heat pump has an independently-cooled desuperheater, which permits supply of two different simultaneous outlet temperatures, and the system has a source of electricity with variable costs.
PTL 4 relates to a system and method for controlling a heating and/or cooling apparatus, and in particular to a system and method for controlling the operation of at least one heating and/or cooling means of the heating and/or cooling apparatus to meet an expected usage demand.
PTL 5 relates to a combined air-conditioning and hot water supply system which, by controlling an operation of a compressor, maintains high efficiency and indoor comfort, prevents hot water supply completion time to become long, and prevents hot water to become short of supply.
PTL 6 relates to a method for heating household hot water which allows the partialisation of a fluid reservoir heated by a heat source from first and second sub-volumes to the first sub-volume only upon the occurrence of a limit condition, depending on the time or value of the withdrawal temperature of the accumulator and representative of a delay in the thermal increase of the fluid at the point of withdrawal of the accumulator in the second sub-volume, arranged at a vertical level lower than that of the first sub-volume.
PTL 7 relates to a method involving switching a hot water storage tank into a comfort-operating mode during failure or for supply of available heat from a heat generator e.g. solar collector, to the storage tank, where the storage tank comprises a storage container. The storage tank is switched into a normal-operating mode, so that a pre-heating region is unloaded during existence of the available heat at the heat generator based on hot water unloading or cooling. The pre-heating region is made receptive for available low temperature heat at the heat generator.
PTL 8 relates to an operation planning method performed in a system including a power generation device, a first electric load operating using power generated by the power generation device, and a second electric load which generates heat using power generated by the power generation device. The operation planning method is performed to design an operation plan for the second electric load and includes: predicting, for individual unit time periods, a power generation amount by the power generation device and a power consumption amount by the first and second electric loads; and designing the operation plan for the second electric load to operate during an operation period including the time period with the largest amount of reverse power, calculated by subtracting the first and second power consumption amounts from the power generation amount.
PTL 9 relates to a storage type water heater used in at least one of hot water supply to supply hot water stored in a hot water storage tank to the bathtub and reheating the bath water in the bathtub, a control device is disposed to allow a heat source machine to additionally boil up the hot water while applying a second hot water remaining amount more than a first hot water remaining amount, as a boiling-up target value, when the amount of remaining hot water in the hot water storage tank becomes less than the first hot water remaining amount, during a time when a predetermined additional boiling-up schedule time passes from the start of hot water supply to the bathtub or the start of reheating of the bathtub water.

### Citation List

### Patent Literature

| | |
|---|---|
| [PTL 1] | JP 2010-175199 A |
| [PTL 2] | EP 2 416 073 A2 |
| [PTL 3] | EP 3 196 558 A1 |
| [PTL 4] | GB 2 483 362 A |
| [PTL 5] | US 2013/145786 A1 |
| [PTL 6] | EP 3 470 744 A1 |
| [PTL 7] | DE 10 2009 004294 A1 |
| [PTL 8] | US 2012/235478 A1 |
| [PTL 9] | JP 2010 175199 A |

### Summary of Invention

### Technical Problem

However, in such a heat storage apparatus as described above, as extraction of heat proceeds, a distance between a portion of the heat storage material in which the thermal energy remains and the heat conductive surface increases. When the distance between the portion in which the thermal energy remains and the heat conductive surface increases, thermal resistance increases to reduce an amount of heat exchange and reduce a heat output that can be supplied to the outside. Accordingly, in the related-art heat storage system, even when the heat storage apparatus stores the predicted demand amount of heat or more, an intended heat may not be output due to an energy shortage. When the heat storage apparatus is configured to store an increased amount of heat to inhibit an energy shortage, operating cost may be increased.

The present invention has been made to solve the above-mentioned problems, and an object of the present invention is to provide a heat storage apparatus, a heat storage system, and a heat storage method, which are capable of reducing situations in which an energy shortage occurs even when heat extraction has proceeded, while suppressing increase in operating cost.

### Solution to the Problem

According to the invention, the problem is solved by means of a heat storage apparatus as defined in independent claim 1.

The present invention also relates to a heat storage method for storing heat in a heat storage apparatus according to claim 1.

Advantageous further developments of the heat storage apparatus and heat storage method according to the invention are set forth in the dependent claims.

### Advantageous Effects of the Invention

According to the present invention, it is possible to reduce situations in which an energy shortage occurs even when heat extraction has proceeded, while suppressing an increase in operating cost.

### Brief Description of the Drawings

- FIG. 1: is a schematic configuration diagram for illustrating a heat storage system according to a first embodiment of the present invention.
- FIG. 2: is a vertical cross-sectional schematic view of a heat storage tank in the first embodiment.
- FIG. 3: is a graph for showing an example of arithmetic expression data representing a relationship between an output rate and a heat storage rate, which is stored in heat output prediction means in the first embodiment.
- FIG. 4: is a flow chart for illustrating an operation of a control unit for each of a heat storing operation and a heat dissipating operation.
- FIG. 5: is a graph for showing results of predicting respective changes in heat storage rate and output rate and a requested output rate in a related art.
- FIG. 6: is a graph for showing results of predicting respective changes in heat storage rate and output rate and a requested output rate in the heat storage system according to the first embodiment.
- FIG. 7: is a schematic configuration diagram for illustrating a heat storage system according to a second embodiment of the present invention.
- FIG. 8: is a vertical cross-sectional schematic view of a heat storage tank in a third embodiment of the present invention.
- FIG. 9: is a vertical cross-sectional schematic view of a heat storage tank in a fourth embodiment of the present invention.
- FIG. 10: is a vertical cross-sectional schematic view of a heat storage tank in a fifth embodiment of the present invention.
- FIG. 11: is an enlarged view of a vertical cross section of a heat storage tank in a sixth embodiment of the present invention.
- FIG. 12: is an enlarged view of a vertical cross section of a heat storage tank in a seventh embodiment of the present invention.
- FIG. 13: represents temperature distributions in a heat storage material with respect to a distance from a heat conductive surface in the first embodiment.

### Description of Embodiments

Now, details of a heat storage apparatus, a heat storage system, and a heat storage method according to embodiments of the present invention are described with reference to the accompanying drawings. The embodiments described below are merely examples, and the present invention is not limited to those embodiments.

### First Embodiment

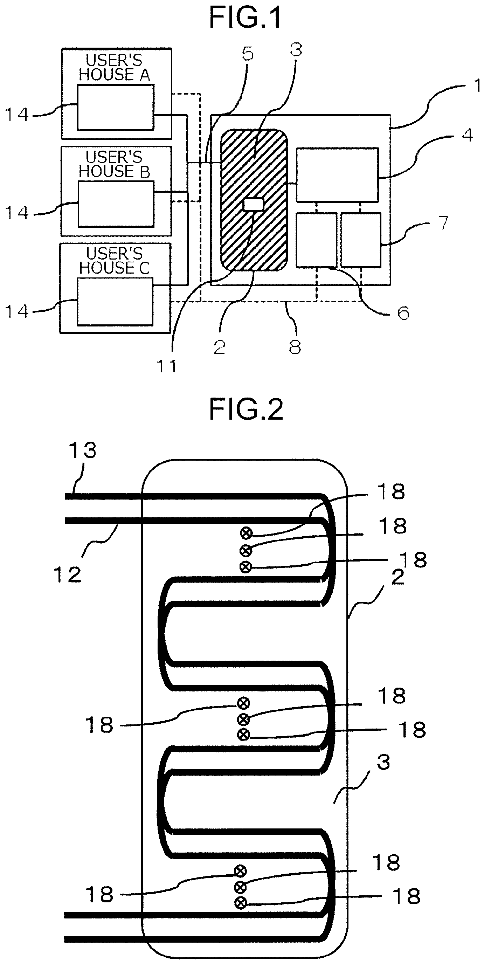

FIG. 1 is a schematic configuration diagram for illustrating a heat storage system according to a first embodiment of the present invention. In an example of FIG. 1, one heat storage apparatus 1 is connected to users' houses A, B, and C being three different homes. The heat storage system operates so as to satisfy thermal demands of the plurality of different users' houses A, B, and C through use of the one heat storage apparatus 1. The individual users' houses may be different households in an apartment building, for example, a condominium, or may be separately built houses adjacent to each other.

The heat storage apparatus 1 includes a heat storage tank 2, a heat source machine 4, heat transport means 5, heat output prediction means 6, a control unit 7, information transmission means 8, and heat storage amount estimation means 11. The heat storage apparatus 1 is connected to respective heat consuming devices 14 in the users' houses using heat stored in the heat storage apparatus 1.

The heat storage tank 2 is a housing holding a heat storage material 3 and formed of a material that does not corrode due to the heat storage material 3. For example, the heat storage tank 2 is formed of stainless steel, iron, a nickel-chromium alloy, a resin, or the like.

The heat storage material 3 is a member capable of storing heat therein, and a material thereof can be selectively determined depending on a status of use, for example, a temperature, in which the heat storage apparatus 1 is used. The material can be selected from, for example, water, brick, soil, concrete, ice, polyethylene glycol, polypropylene glycol, iron, aluminum, and stainless steel in consideration of sensible heat utilization. In addition, for example, when latent heat utilization is taken into consideration, the material can be selected from: saturated hydrocarbons, such as linear paraffins, such as decane, undecane, dodecane, tridecane, tetradecane, pentadecane, hexadecane, heptadecane, octadecane, nonadecane, eicosane, heneicosane, docosane, tricosane, tetracosane, pentacosane, hexacosane, heptacosane, octacosane, nonacosane, triacontane, hentriacontane, dotriacontane, tritriacontane, tetratriacontane, pentatriacontane, hexatriacontane, heptatriacontane, octatriacontane, nonatriacontane, tetracontane, dotetracontane, tritetracontane, tetratetratetracontane, hexatetracontane, octatetracontane, pentacontane, hexacontane, heptacontane, and hectane; fatty acids, such as palmitic acid, stearic acid, myristic acid, oleic acid, palmitoleic acid, y-linolenic acid, linoleic acid, arachidonic acid, α-linolenic acid, decanoic acid, pentadecanoic acid, heptadecanoic acid, behenic acid, lignoceric acid, decenoic acid, pentadecenoic acid, and myristoleic acid; metals, such as mercury, potassium, sodium, gallium, indium, bismuth, aluminum, zinc, silicon, magnesium, copper, tin, lead, cadmium, and an alloy containing at least one of those metals; sugar alcohols, such as D-threitol, L-threitol, DL-threitol, meso-erythritol, L-erythritol, D-erythritol, DL-erythritol, pentaerythritol, dipentaerythritol, xylitol, D-arabitol, L-arabitol, DL-arabitol, D-sorbitol, L-sorbitol, DL-sorbitol, D-mannitol, L-mannitol, and DL-mannitol; hydrated salts, such as potassium fluoride tetrahydrate, calcium chloride hexahydrate, lithium nitrate trihydrate, sodium acetate trihydrate, sodium thiosulfate pentahydrate, sodium sulfate decahydrate, disodium hydrogen phosphate, iron chloride hexahydrate, magnesium sulfate heptahydrate, lithium acetate dihydrate, sodium hydroxide monohydrate, barium hydroxide octahydrate, strontium hydroxide octahydrate, ammonium aluminum sulfate hexahydrate, and potassium aluminum sulfate hexahydrate; and molten salts, such as aluminum chloride, lithium nitrate, sodium nitrate, potassium nitrate, lithium hydroxide, calcium chloride, lithium chloride, magnesium chloride, potassium chloride, potassium fluoride, lithium fluoride, lithium carbonate, potassium carbonate, barium nitrate, and sodium carbonate. Further, the material can be selected from, for example, clathrate hydrates, such as tetrabutylammonium bromide, and water.

The raw material of the heat storage material 3 is not limited to the materials mentioned above. For example, the raw material of the heat storage material 3 may also be selected widely from among materials that have melting points in a use temperature range thereof and in which phase changes between a liquid and a solid occur.

Alternatively, the raw material of the heat storage material 3 may also be selected from among chemical heat storage materials each using heat generated during a reversible chemical reaction of the material, such as ferric chloride (III)-methanol, CaSO₄·(1/2)H₂O/CaSO₄, and CaO/H₂O/Ca(OH)₂. A raw material other than those mentioned above can also be used as the heat storage material 3 as long as the heat storage material and a heat medium perform heat exchange therebetween and indirectly transmit/receive heat to/from each other.

The heat storage tank 2 further includes the heat storage amount estimation means 11 configured to estimate an amount of heat stored in the heat storage material 3. For example, the heat storage tank 2 includes the heat storage amount estimation means 11. The heat storage amount estimation means 11 measures a temperature of the heat storage material 3 in the heat storage tank 2 and estimates, from the measured temperature, thermal energy remaining in the heat storage tank 2.

The heat storage amount estimation means 11 in the first embodiment includes a plurality of temperature sensors 18 for measuring the temperature of the heat storage material 3 in the heat storage tank 2, a storage unit (not shown) storing therein a table representing a relationship between the remaining thermal energy in the heat storage material 3 and the temperature of the heat storage material 3, and a calculation unit (not shown) configured to calculate the remaining thermal energy by referring to the temperatures measured by the plurality of temperature sensors 18 and to the table stored in the storage unit.

For example, the heat storage amount estimation means 11 estimates an amount of heat stored in the heat storage material 3 based on a sequentially measured temperature difference between an inlet and an outlet of the heat storage tank 2 and on a flow rate and a specific heat of a heat medium 13, the details of which are described later. It is possible to prevent a shortage of the heat storage amount by storing a deficit amount of heat and then estimating the amount of stored heat again. When a predicted required amount of heat and the estimated heat storage amount are large, heat is not stored until the heat storage amount is estimated next, to thereby allow reduction in operating cost.

The heat source machine 4 is a member configured to generate heat to be stored in the heat storage tank 2. As described later in detail, when the heat storage system determines that a heat storing operation is required to be performed, the heat source machine 4 generates heat and stores the heat in the heat storage tank 2. For example, the heat source machine 4 is a heat pump device configured to absorb heat from the outside thereof. Alternatively, for example, the heat source machine 4 is a conversion device configured to convert electricity, a fuel, solar light, or the like to heat.

The heat transport means 5 is a member configured to transport heat between the heat storage tank 2 and the respective heat consuming devices 14, 14, and 14 of the users' houses A, B, and C using the heat stored in the heat storage tank 2. For example, the heat transport means 5 is piping thermally connecting the heat storage tank 2 and the respective heat consuming devices 14, 14, and 14 of the users' houses A, B, and C, and has a heat medium such as water, a cooling medium, or a brine therein.

The heat output prediction means 6 is a member configured to predict a consumed amount of heat to be consumed by the heat consuming devices 14, 14, and 14 of the users' houses A, B, and C connected by the heat transport means 5 to the heat storage tank 2 and an amount of heat to be output to the heat consuming devices 14, 14, and 14. For example, the heat output prediction means 6 is a processor.

The heat output prediction means 6 predicts the consumed amount of heat to be consumed by the heat consuming devices 14, 14, and 14 of the users' houses A, B, and C based on heat consumption information of the users' houses A, B, and C obtained via the information transmission means 8 described later, and predicts the amount of heat to be output to the heat consuming devices 14, 14, and 14.

The heat output prediction means 6 further includes heat consumption amount recording means 16 (not shown) configured to record respective past values of amounts of heat previously consumed in the users' houses A, B, and C and heat output recording means 17 (not shown) configured to record respective past values of amounts of heat previously output to the individual users' houses A, B, and C.

The heat output prediction means 6 predicts respective amounts of heat to be consumed in the individual users' houses A, B, and C based on the past values of the previously consumed amounts of heat recorded in the heat consumption amount recording means 16 and on the past values of the previously output amounts of heat recorded in the heat output recording means 17. The heat output prediction means 6 further includes storage means configured to preliminarily store data related to an amount of the heat storage material 3 held in the heat storage tank 2 and physical properties thereof and data related to physical properties of the components included in the heat storage system.

For example, the storage means included in the heat output prediction means 6 stores the specific heat, a kinematic viscosity coefficient, a heat conductivity, a linear expansion coefficient, and the like of the heat storage material 3 and also stores materials, weights, specific heats, and the like of the components such as the heat storage tank 2 and a heat medium flow path 12. The storage means included in the heat output prediction means 6 may also store heat storage characteristics such as the heat storage amount and conditions for heat storage.

The control unit 7 is a control member configured to control the individual portions of the heat storage apparatus 1, and is, for example, a processor. The control unit 7 also controls respective operations of the individual portions based on the heat output predicted by the heat output prediction means 6 and on the heat storage amount estimated by the heat storage amount estimation means 11.

The information transmission means 8 is a transmission member configured to transmit the heat consumption information of the users' houses A, B, and C to the heat output prediction means 6 of the heat storage apparatus 1. For example, the information transmission means 8 is a connection cable communicatively connecting the heat output prediction means 6 and each of the users' houses A, B, and C.

The information transmission means 8 may also transmit presence information, absence information, and the like of each of the users' houses A, B, and C and may also be a wired communication member such as an electrical wire or an optical cable, or a wireless communication member configured to perform wireless communication.

The heat consuming devices 14, 14, and 14 are the respective heat consuming devices arranged in the individual users' houses A, B, and C and configured to consume the heat stored in the heat storage tank 2, which is supplied via the heat transport means 5. For example, each of the heat consuming devices 14, 14, and 14 may be a water heater or an air conditioner.

The heat consumption amount recording means 16 included in the heat output prediction means 6 is a medium configured to record the past values of the previously consumed amounts of heat, which is, for example, a rewritable nonvolatile recording medium such as a memory card, a USB memory, an SD card, or the like. The heat output recording means 17 included in the heat output prediction means 6 is a medium configured to record the past values of the previously output amounts of heat, which is, for example, a USB memory, a SD card, or the like.

The heat output prediction means 6 in the first embodiment is configured to separately include the heat consumption amount recording means 16 and the heat output recording means 17. However, the present invention is not limited to the example. For example, the heat output prediction means 6 may also be configured to include one device having both of a function of the heat consumption amount recording means 16 and a function of the heat output recording means 17.

FIG. 2 is a vertical cross-sectional schematic view of the heat storage tank 2 in the first embodiment. In the example of FIG. 2, a vertically taken cross-sectional view of the heat storage tank 2 using a coil-tank heat exchange method is schematically illustrated.

The first heat medium flow path 12 and the second heat medium flow path 13 are connected to the heat storage tank 2. The first heat medium flow path 12 and the second heat medium flow path 13 are used for heat exchange with the heat storage material 3 in the heat storage tank 2. The first heat medium flow path 12 and the second heat medium flow path 13 are arranged to vertically meander in the heat storage tank 2 in the vertical direction, while being spaced apart from each other.

The first heat medium flow path 12 is connected to the heat source machine 4, and the second heat medium flow path 13 is connected to the heat transport means 5. In the heat storage tank 2, the plurality of temperature sensors 18 configured to measure the temperature of the heat storage material 3 are installed.

In the heat storage tank 2, the plurality of temperature sensors 18, 18, and 18 are arranged at different distances in a tangential direction from a linear heat conductive surface of the first heat medium flow path 12. The plurality of temperature sensors 18, 18, and 18 are also arranged at different distances in a tangential direction from a linear heat conductive surface of the second heat medium flow path 13.

A heat medium flows through the first heat medium flow path 12. The heat medium in the first heat medium flow path 12 performs heat exchange with the heat storage material 3 via a wall surface of the first heat medium flow path 12. In other words, the wall surface of the first heat medium flow path 12 functions as the heat conductive surface to exchange heat. The first heat medium flow path 12 is formed by using, for example: a metal, such as copper, aluminum, stainless steel, titanium, or a nickel chromium alloy; or a resin, such as polypropylene, polyethylene terephthalate, polyethylene, or polycarbonate.

When the heat storage system performs the heat storing operation, the heat source machine 4 transfers generated heat to the heat medium in the first heat medium flow path 12. The heat medium storing the heat transferred thereto from the heat source machine 4 flows through the first heat medium flow path 12 to move into the heat storage tank 2 and give the heat to the heat storage material 3 via the wall surface of the first heat medium flow path 12 serving as the heat conductive surface. The heat medium that has given the heat to the heat storage material 3 flows through the first heat medium flow path 12 to move again toward the heat source machine 4 and store heat from the heat source machine 4.

A heat medium flows through the second heat medium flow path 13. The heat medium in the second heat medium flow path 13 performs heat exchange with the heat storage material 3 via a wall surface of the second heat medium flow path 13. In other words, the wall surface of the second heat medium flow path 13 functions as the heat conductive surface to exchange heat. The second heat medium flow path 13 is formed by using, for example: a metal, such as copper, aluminum, stainless steel, titanium, or a nickel chromium alloy; or a resin, such as polypropylene, polyethylene terephthalate, polyethylene, or polycarbonate.

When the heat storage system performs a heat dissipating operation, the heat storage material 3 transfers the heat stored therein to the heat medium in the second heat medium flow path 13 via a wall surface of the second heat medium flow path 13 serving as the heat conductive surface. The heat medium storing the heat transferred thereto from the heat storage material 3 flows through the second heat medium flow path 13 to move to the heat transport means 5 and then move to the respective heat consuming devices 14, 14, and 14 of the users' houses A, B, and C. The heat medium moved to the heat consuming devices 14, 14, and 14 gives the heat to the heat consuming devices 14, 14, and 14 and flows through the second heat medium flow path 13 to move again into the heat storage tank 2 and store heat from the heat storage material 3.

As the heat medium, there may be used: water; a brine, such as silicon oil, ethylene glycol, or propylene glycol; or a refrigerant, such as R410A, CO2, R22, R32, R404A, R123, R134a, R407C, or R507A. The heat medium in the first heat medium flow path 12 and the heat medium in the second heat medium flow path 13 may also be made of the same raw material. When the heat medium in the first heat medium flow path 12 and the heat medium in the second heat medium flow path 13 are made of the same raw material, reductions in manufacturing cost/manufacturing load and simplified operation control are expected.

Alternatively, the heat medium in the first heat medium flow path 12 and the heat medium in the second heat medium flow path 13 may also be made of different raw materials. When the heat medium in the first heat medium flow path 12 and the heat medium in the second heat medium flow path 13 are made of different raw materials, optimization of a heat exchange efficiency via more complicated operation control is expected.

In the above-mentioned first embodiment, the heat storage tank 2 using the coil-tank heat exchange method is described as an example. However, the present invention is not limited to the example described above. The heat storage tank 2 may also be configured to use, for example, a tube-fin method, a plate method, a shell-and-tube method, a plate-fin method, or the like.

The heat storage system according to the first embodiment performs the heat storing operation and the heat dissipating operation. In the heat storing operation, the heat storage system generally stores heat in the heat storage material 3 in the heat storage tank 2. In the heat dissipating operation, the heat storage system generally dissipates heat stored in the heat storage material 3 in the heat storage tank 2.

When performing the heat storing operation, the heat storage system causes the heat source machine 4 to generate heat. The heat generated by the heat source machine 4 is stored in the heat medium in the first heat medium flow path 12. A first pump is connected to the heat storage system to allow the heat medium storing the heat therein to flow through the first heat medium flow path 12. The heat storage system drives the first pump to move the heat medium storing the heat therein from the heat source machine 4 side into the heat storage tank 2.

The heat medium in the first heat medium flow path 12 that has moved into the heat storage tank 2 gives the heat to the heat storage material 3 in the heat storage tank 2. The heat storage system further drives the first pump to move the heat medium that has given the heat to the heat storage material 3 again toward the heat source machine 4 side to allow the heat medium to store heat generated by the heat source machine 4 again.

When the heat storing operation is started, heat is transferred to the heat storage material 3 located in the vicinity of the heat conductive surface of the first heat medium flow path 12 and then gradually transferred from the vicinity of the heat conductive surface to the surrounding environment. The heat storage system sequentially monitors respective temperatures measured by the plurality of temperature sensors 18 arranged at the different distances in the tangential direction from the heat conductive surface, and ends the heat storing operation when any of the monitored measured values exceeds a predetermined value. The heat storing operation control using the plurality of temperature sensors 18 allows the heat storage system according to the first embodiment to perform efficient heat exchange.

A second pump is connected to the heat storage system to allow the heat medium in the second heat medium flow path 13, which has received heat from the heat storage material 3, to flow to the heat transport means 5. When performing the heat dissipating operation, the heat storage system drives the second pump to move the heat medium in the second heat medium flow path 13, which has received the heat from the heat storage material 3, to the heat transport means 5. The heat medium that has moved to the heat transport means 5 moves to the respective heat consuming devices 14, 14, and 14 of the individual users' houses A, B, and C, respectively.

The heat medium that has moved to the heat consuming devices 14, 14, and 14 gives the heat to the heat consuming devices 14, 14, and 14, respectively. The heat storage system further drives the second pump to move again the heat medium that has given the heat to the heat consuming devices 14, 14, and 14 toward the heat storage tank 2 side and allows the heat medium to receive again the heat stored in the heat storage material 3.

When the heat dissipating operation is started, heat is transferred from the heat storage material 3 located in the vicinity of the heat conductive surface of the second heat medium flow path 13 to the heat medium in the second heat medium flow path 13. As a result, the heat storage amount begins to decrease first in the heat storage material 3 located in the vicinities of the heat conductive surface, such as the surface of the second heat medium flow path 13 and a heat conductive fin provided in the second heat medium flow path 13.

As a result, a distribution is formed in which the amount of stored heat remaining in the heat storage material 3 becomes smaller at a smaller distance from the heat conductive surface and becomes larger at a larger distance from the heat conductive surface. The amount of stored heat remaining at a position more distant from the heat conductive surface meets a higher resistance at the time of movement to the heat conductive surface, and consequently an amount of heat that can be output may be reduced.

When the heat storage material 3 is a solid material or a latent heat storage material in which phase changes due to transmission/reception of heat, the possibility is particularly high. Further, even when the heat storage material 3 is a liquid material, there is the same concern about the reduction in the amount of output heat that depends on the heat resistance in the movement of heat resulting from heat conduction.

The heat storage system according to the first embodiment includes the heat output prediction means 6 to cope with an output reduction as described above. The heat output prediction means 6 predicts a future heat output in consideration of a distance between the heat conductive surface of the second heat medium flow path 13 and the heat storage material 3 storing a sufficient amount of heat therein.

The heat storage amount estimation means 11 calculates an amount of heat obtained by the heat storage material 3 in the heat storage tank 2 and an amount of heat lost by the heat storage material 3 in the heat storage tank 2 based on the amount of the held heat storage material 3, the specific heat of the heat storage material 3, and the respective temperatures measured by the plurality of temperature sensors 18, 18, and 18.

The heat storage system according to the first embodiment includes the plurality of temperature sensors 18, 18, and 18, and can therefore accurately predict the temperature distribution in the heat storage tank 2, while the accuracy of calculation of the amounts of heat by the heat storage amount estimation means 11 is also increased.

When the heat storage material 3 is a two-phase fluid, a specific weight change resulting from a temperature change may significantly change a vertical temperature distribution. Accordingly, the heat storage system according to the first embodiment can further increase the accuracy of prediction of the temperature distribution by arranging the plurality of temperature sensors 18 such that the temperature sensors 18 are apart from each other in the vertical direction.

The heat stored in the heat storage material 3 is transferred from the heat conductive surface such as the surface of the second heat medium flow path 13 or the heat conductive fin to the heat medium in the second heat medium flow path 13. Consequently, a distribution is formed in which the amount of stored heat remaining in the heat storage material 3 becomes smaller at a smaller distance from the heat conductive surface and becomes larger at a larger distance therefrom, which appears as the temperature distribution.

Accordingly, the heat storage system according to the first embodiment can accurately predict the temperature distribution in the heat storage tank 2 by arranging the plurality of temperature sensors 18 at positions of different distances from the heat conductive surface in a direction of extending far away from the vicinity of the heat conductive surface being the wall surface of the second heat medium flow path 13.

The heat storage amount estimation means 11 estimates the amount of stored heat remaining in the heat storage material 3 from data of the obtained temperature distribution. A difference between the estimated amount of stored heat and a predicted amount of required heat is calculated, and heat corresponding to the difference is generated. Accordingly, even when heat extraction has proceeded, it is possible to reduce situations in which an energy shortage occurs.

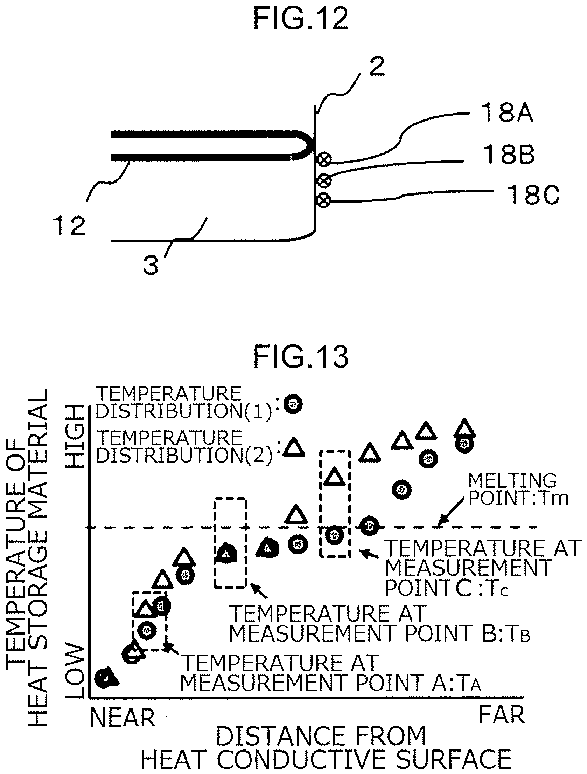

FIG. 13 represents temperature distributions in the heat storage material with respect to the distance from the heat conductive surface according to the first embodiment. When the latent heat storage material is used as the heat storage material, during dissipation of latent heat at the melting point thereof, there is no temperature change. Accordingly, even though an average temperature of the heat storage material is larger in a temperature distribution (2) than in a temperature distribution (1), at a measurement point B, respective temperatures in the temperature distributions (1) and (2) may be on the same level. When measurement is performed at only one point, an estimated value of the heat storage amount may include an error.

Meanwhile, through measurement of temperatures at measurement points A and C, it is possible to more precisely estimate that temperatures in the temperature distribution (2) are higher than those in the temperature distribution (1), and the heat storage amount is larger in the temperature distribution (2) than that in the temperature distribution (1).

For example, it is possible to use a control method that starts the heat storing operation when the temperature at the measurement point C at a large distance from the heat conductive surface becomes lower than the melting point of the heat storage material 3, to thereby reduce a heat dissipation loss while preventing a heat shortage.

The heat storage system according to the first embodiment includes the heat storage amount estimation means 11 and the plurality of temperature sensors 18 described above. This allows temperature distributions in the heat storage material 3 from the heat conductive surface of the second heat medium flow path 13 to be calculated and allows a temperature gradient to be calculated.

The heat storage system according to the first embodiment also calculates, based on the temperature gradient calculated by the heat storage amount estimation means 11 and on data related to the physical properties of the heat storage material 3 and the components, the amount of heat stored in the heat storage tank 2 required for outputting the amount of heat requested by the heat consuming devices 14, 14, and 14.

The amount of stored heat estimated by the heat storage amount estimation means 11 may possibly include an error due to an error of the temperatures measured by the temperature sensors 18. Accordingly, the heat storage amount estimation means 11 may also be configured to record differences between previously estimated heat storage amounts and amounts of heat actually remaining in the heat storage tank 2 and add the amount of heat corresponding to the largest difference to the estimated heat storage amount. Such a configuration can reduce situations in which an energy shortage occurs. The amounts of heat actually remaining in the heat storage tank 2 may also be obtained from a total value of heat consumption amounts after the estimation.

The heat storage amount estimation means 11 according to the first embodiment estimates the heat storage amount at a predetermined timing. For example, the heat storage amount estimation means 11 estimates the heat storage amount a predetermined period before a change time from late night hours when electricity charges are low to daytime hours when the electricity charges are high. In this case, the heat storage apparatus 1 has a clock function unit configured to measure a time period and a memory configured to store data of the charge change time.

The heat storage amount estimation means 11 according to the first embodiment further calculates, for example, a difference between an amount of heat required during the daytime hours when the electricity charges are high and an amount of stored heat remaining at the time of estimation. Based on the difference calculated by the heat storage amount estimation means 11, the control unit 7 drives the heat source machine 4 during the late night hours when the electricity charges are low to generate an amount of heat corresponding to the calculated difference. Thus, the heat storage system according to the first embodiment allows a reduction in operating cost compared to that when the heat source machine 4 is operated during the daytime hours when the electricity charges are high.

To determine the time at which the heat storage amount estimation means 11 makes the estimation, a learning method for determining the estimation time based on, for example, a time period sufficient to allow a deficit amount of heat to be generated, which is assumed from the past values of the previous heat consumption amounts, may also be used. Alternatively, for example, a method of setting a predetermined time in advance, such as two hours before the change time between the time-of-day dependent charges, may also be used.

For example, the heat consumption amount recording means 16 according to the first embodiment records past data of the previous heat consumption amounts to allow the heat storage amount estimation means 11 to estimate the heat storage amount. Further, for example, the heat consumption amount recording means 16 records past data of the previous heat consumption amounts totaled for each day of week or each season. This allows the heat storage system according to the first embodiment to accurately predict a required amount of heat.

The heat storage apparatus 1 according to the first embodiment may also further include an external air temperature measurement unit configured to measure a temperature of external air. In addition, the control unit 7 may also be configured to include a correction formula for collecting the previous past data recorded by the heat consumption amount recording means 16 based on an external air temperature on a day when the external air temperature measurement unit performed the measurement.

Such a configuration allows the heat storage apparatus 1 according to the first embodiment to more accurately predict the heat consumption amount. In other words, the heat storage apparatus 1 according to the first embodiment includes heat consumption amount prediction means based on the control unit 7, and the heat consumption amount prediction means can accurately predict the heat consumption amount.

The heat storage apparatus 1 may also have a configuration using a heat pump as the heat source machine 4 and not using a time-of-day-dependent electricity charge system as described above. In the case of using such a configuration, it is possible to economically generate heat with a high coefficient of performance (COP) by operating the heat pump so as to allow heat to be generated during the daytime hours when the external air temperature is high. The heat storage apparatus 1 may also be configured to predict a time at which the external air temperature reaches a peak during the daytime hours when the external air temperature is high from, for example, past data of previous external air temperatures, weather information, COP data obtained during previous heat generation, and the like.

To determine how many hours before an external air temperature peak time of the next day the heat storage amount estimation means 11 is to estimate the heat storage amount, for example, a learning method for determining the time based on a time period sufficient to allow a deficit amount of heat to be generated, which is assumed from the past values of the previous heat consumption amounts, may be used or a method of preliminarily setting a predetermined time may also be used.

The heat storage system according to the first embodiment may also be configured to include a table or a calculation formula representing a relationship between the external air temperature and the COP of the heat pump to predict the required amount of heat. The COP on a day when the heat storage amount is to be estimated can be predicted from a predicted external air temperature value, past data during previous several days, or the like. It is also possible to calculate a time period required for generating a required heat consumption amount using the predicted COP.

The time period required for generating the required heat consumption amount may also be set longer for safety. It is possible to prevent a situation in which a heat shortage occurs by setting the required time period longer, even when the external air temperature is lower than predicted or when heat larger in amount than that in the past data during the previous several days is consumed.

The heat storage amount estimation means 11 according to the first embodiment described above includes a control program for estimating the heat storage amount at predetermined intervals and a transition recording unit configured to record a transition of a difference between a predicted required amount of heat and an estimated heat storage amount.

Accordingly, the heat storage system estimates the heat storage amount at given time intervals, calculates the difference between the estimated heat storage amount and the predicted required amount of heat, and generates heat corresponding to the difference. This allows the heat storage system to add heat in consideration of the deficit amount of heat and prevent a heat shortage, while suppressing an increase in operating cost.

The heat storage system according to the first embodiment described above includes a past data storage unit configured to record past data of amounts of heat consumption and a threshold value for determining whether or not the heat source machine 4 is to be operated. When a difference between the heat storage amount at the estimation time and a future predicted amount of heat consumption exceeds the threshold value, the heat storage system operates the heat source machine 4.

The heat storage system also calculates a total amount of heat consumption after the previous estimation, and estimates the heat storage amount again when a total value reaches a given value or more. Such a configuration allows the heat storage system to prevent a significant shortage of the heat storage amount. It is possible to more accurately estimate the heat storage amount and improve an effect of preventing a heat shortage by selecting a timing to estimate the heat storage amount from among those in a plurality of methods.

When an amount of heat requested by the heat consuming devices 14, 14, and 14 during a predetermined period is larger than an output of the heat source machine 4 during the predetermined period, the time at which the heat storage amount estimation means 11 estimates the heat storage amount is significantly important.

This is because the requested amount of heat may not be able to be satisfied due to a shortage of the heat storage amount. In the heat storage system according to the first embodiment described above, the heat storage amount estimation means 11 may perform the estimation at the timing described above to eliminate a heat output shortage resulting from a shortage of the heat storage amount.

The control unit 7 calculates a difference between the heat storage amount estimated by the heat storage amount estimation means 11 and the required amount of heat predicted by the heat consumption amount recording means 16. The control unit 7 determines whether the calculated difference is positive or negative. When the control unit 7 determines that the calculated difference is positive, that is, when the current heat storage amount is insufficient for the required amount of heat, the control unit 7 operates the heat source machine 4 to generate heat. The generated heat is transported to the heat storage tank 2 via the heat medium 13 through the heat medium flow path 12 and stored in the heat storage material 3.

The heat storage amount estimation means 11 can estimate the amount of heat stored in the heat storage material 3 based on, for example, a temperature difference between an inlet and an outlet of the heat storage tank 2, a flow rate of the heat medium 13, and a specific heat thereof.

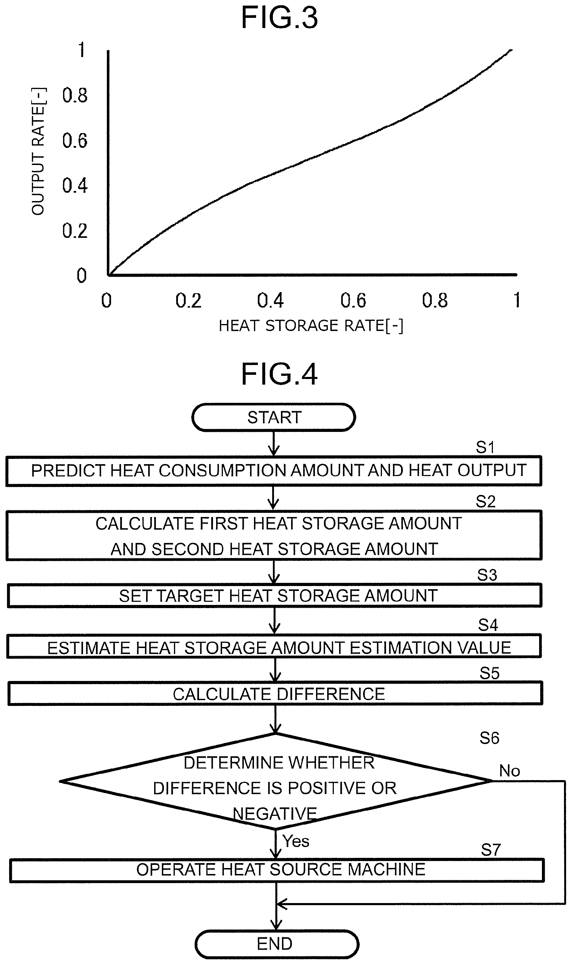

FIG. 3 is a graph for showing an example of arithmetic expression data representing a relationship between an output rate and a heat storage rate, which is stored in the heat output prediction means 6 according to the first embodiment. The heat output prediction means 6 stores, as the data, an arithmetic expression representing a relationship between the output rate as a ratio of a requested output to a maximum output of the heat storage apparatus 1 and the heat storage rate as a ratio of the heat storage amount to a maximum heat storage amount. The heat output prediction means 6 can calculate the heat storage rate from the obtained output rate. The heat output prediction means 6 can also calculate the output rate from the obtained heat storage rate.

The heat consumption amount recording means 16 collects respective previous past values of heat consumption amounts in the individual users' houses at each time through the information transmission means 8 and averages the collected values. Meanwhile, the heat output recording medium 17 collects previous past values of heat outputs in the individual users' houses at each time through the information transmission means 8 and averages the collected values.

The heat output prediction means 6 predicts a heat consumption amount and a heat output on the next day based on the past values averaged by the information transmission means 8 and on the past values averaged by the heat output recording means 17. The control unit 7 operates the heat source machine 4 based on the predicted total heat consumption amount and the predicted total heat output in all the users' houses on the next day such that a heat output shortage does not occur at each time.

Through collection of the past data of the heat consumption amounts and the heat outputs for each day of a weak or each season, for example, it is possible for the heat output prediction means 6 to more accurately predict the heat consumption amount and the heat output, and prevent a heat amount shortage, a heat output shortage, and excess heat.

The heat output prediction means 6 overwrites results of predicting the heat consumption amount and the heat output based on the results of actual heat consumption. For example, a case is considered in which, while it is predicted from previous past records that the user's house A requests a large heat output for filling a bathtub with hot water at 18:00 and the user's house B requests a large heat output for filling a bathtub with hot water at 19:00, a request is not issued from the user's house A at 18:00.

In such a case, requests for large heat outputs for filling the bathtubs with hot water may possibly be simultaneously issued from the users' houses A and B at 19 o'clock. Accordingly, it is possible to update the prediction such that the user's house A may request a large heat output for filling the bathtub with hot water at 18:30. Such updating can more reliably prevent a situation in which a heat amount shortage and a heat output shortage occur.

FIG. 4 is a flow chart for illustrating an operation of the control unit 7 for each of the heat storing operation and the heat dissipating operation. The control unit 7 uses the heat output prediction means 6 to predict the heat consumption amount and the heat output based on the past values of the heat consumption amounts recorded in the heat consumption amount recording means 16 and on the past values of the heat amounts in the heat output recording means 17 (Step S1).

Then, the control unit 7 calculates a first heat storage amount required for satisfying the total amount of heat consumption during a predetermined time period, which is predicted by the heat output prediction means 6, and calculates, based on arithmetic expression data for converting a heat output to a heat storage amount, a heat storage amount that satisfies the heat output at each time from the heat output predicted by the heat output prediction means 6, to thereby calculate a second heat storage amount required for satisfying the heat output constantly requested during the predetermined time period (Step 2). The control unit 7 further sets a larger one of the first heat storage amount and the second heat storage amount as a target heat storage amount (Step 3). It is possible to prevent a situation in which a heat shortage occurs and an intended heat output cannot be produced by calculating not only the heat storage amount predicted from the actual heat consumption amount, but also the heat storage amount required for satisfying the predicted heat output and setting the larger heat storage amount as the target heat storage amount.

The control unit 7 uses the heat storage amount estimation means 11 to estimate, as a heat storage amount estimation value, the amount of heat stored in the heat storage apparatus 1 when the target heat storage amount is set (Step S4). The control unit 7 subtracts, from the set target heat storage amount, the heat storage amount estimation value resulting from the estimation to calculate a difference therebetween (Step S5). The control unit 7 determines whether the difference is positive or negative (Step S6). When the difference is positive ("YES" in Step 6), the control unit 7 operates the heat source machine 4 based on the calculated difference (Step S7), and ends the operation.

When the difference is negative ("NO" in Step S6), the control unit 7 ends the operation without operating the heat source machine 4. Such an operation allows the heat storage system according to the first embodiment to reduce situations in which an energy shortage occurs even when heat extraction has proceeded, while suppressing an increase in operating cost.

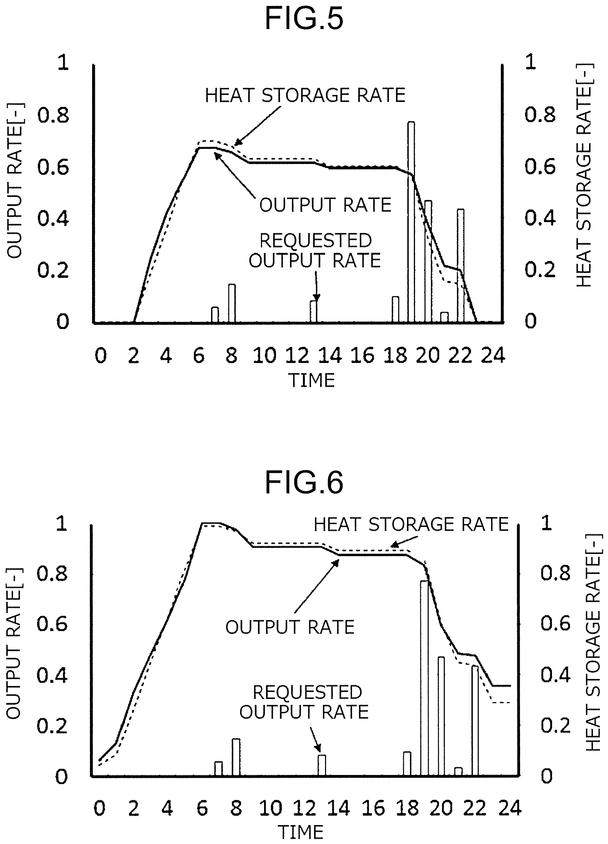

FIG. 5 is a graph for showing results of predicting respective changes in heat storage rate and output rate and a requested output rate in a related art. A first condition is that, in principle, the heat storage amount is constantly positive. Accordingly, in the example in FIG. 5, the heat storing operation is performed during the night (from 2:00 to 6:00) such that the amount of heat is constantly positive. However, in the example in FIG. 5, an output shortage occurs at 19:00 at which a requested output rate is highest.

FIG. 6 is a graph for showing results of predicting respective changes in heat storage rate and output rate and a requested output rate in the first embodiment. The requested output rate in FIG. 6 is the same as the requested output rate in FIG. 5. However, the heat storage system according to the first embodiment obtains the second heat storage amount required for satisfying the heat output predicted at each time based on the arithmetic expression data for converting the output rate to the heat storage rate. Accordingly, in the example in FIG. 6, even at 19:00 at which the output shortage is observed in FIG. 5, the heat storage amount is positive and the output rate exceeds the requested output rate to be able to prevent a heat amount shortage and a heat output shortage.

The heat storage system according to the example in FIG. 2 has, by way of example, a configuration in which the plurality of temperature sensors 18, 18, and 18 are arranged in a straight line to be at different distances in the tangential direction of the heat conductive surface. However, the present invention is not limited to the example of the configuration described above.

The heat storage system may also have a configuration in which the temperature sensors 18, 18, and 18 are not juxtaposed in a straight line as long as the temperature sensors 18, 18, and 18 are at different distances in the tangential direction of the heat conductive surface. This configuration increases flexibility of a layout of the plurality of temperature sensors 18, 18, and 18.

The heat storage system according to the example of FIG. 2 has, by way of example, a configuration in which a set of the three temperature sensors 18, 18, and 18 is arranged. However, the present invention is not limited to the example of the configuration described above. A set of the two temperature sensors 18 and 18 or a set of the four or more temperature sensors 18, 18, 18, ... may also be arranged. This configuration increases the flexibility of the layout of the plurality of temperature sensors 18, 18, and 18.

### Second Embodiment

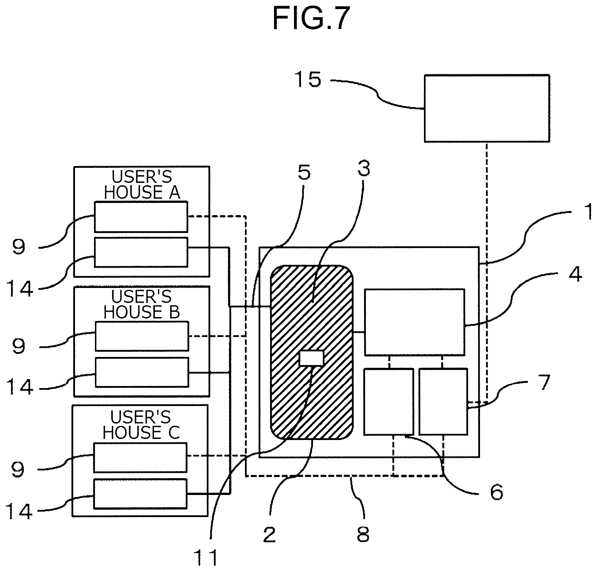

A heat storage system according to a second embodiment of the present invention is described with reference to FIG. 7. FIG. 7 is a schematic configuration diagram for illustrating the heat storage system according to the second embodiment. When compared to the heat storage system according to the first embodiment, the heat storage system according to the second embodiment further includes human sensing means 9 and weather information collection means 15. The following is a description of the heat storage system according to the second embodiment, which is given with a focus on the difference from the heat storage system according to the first embodiment.

The human sensing means 9, 9, and 9 are sensors configured to sense the presence or absence of humans, and are arranged in the individual users' houses A, B, and C, respectively. Each of the human sensing means 9, 9, and 9 is connected to the control unit 7 to transmit results of sensing to the control unit 7.

The weather information collection means 15 is means for obtaining weather information, and is connected to the control unit 7. For example, the weather information collection means 15 detects respective temperatures and illuminances outside the individual users' houses A, B, and C, and obtains and collects results of the detection as the weather information. The weather information collection means 15 transmits the obtained weather information to the control unit 7.

The control unit 7 predicts, using the heat output prediction means 6, the heat consumption amount and the heat output based not only on the past values of the heat consumption amounts recorded in the heat consumption amount recording means 16, but also on the sensing results received from the human sensing means 9, 9, and 9 and the weather information received from the weather information collection means 15.

The heat storage system according to the second embodiment predicts a future usage amount of heat and a future heat output by appropriately collecting human sensing information obtained from the human sensing means 9, and performs the heat storing operation. For example, the heat storage system according to the second embodiment predicts the future usage amount of heat and the future heat output based on a sensing result received from the human sensing means 9. This allows the heat storage system according to the second embodiment to economically inhibit an excess of the heat storing operation.

The heat storage system according to the second embodiment also predicts the future usage amount of heat and the future heat output by appropriately collecting the weather information obtained from the weather information collection means 15, and performs the heat storing operation.

For example, the heat storage system predicts, based on the weather information collected on a current day, a next-day usage amount of heat and a next-day heat output, and performs the heat storing operation using nighttime electric power on the day when the weather information was collected. Such a configuration allows thermal energy to be generated at low cost and used.

When predicting the future usage amount of heat and the future heat output, the heat storage system according to the second embodiment uses, in addition to the past values of the heat consumption amounts recorded in the heat consumption amount recording means 16 and the past values of the amounts of heat in the heat output recording means 17, the human sensing information obtained from the human sensing means 9 and the weather information obtained from the weather information collection means 15.

Consequently, in the heat storage system according to the second embodiment, the accuracy of the prediction may be improved, and the effect of preventing a heat amount shortage and a heat output shortage may be improved. Therefore, it is possible to further reduce situations in which an energy shortage occurs even when heat extraction has proceeded, while suppressing an increase in operating cost.

### Third Embodiment

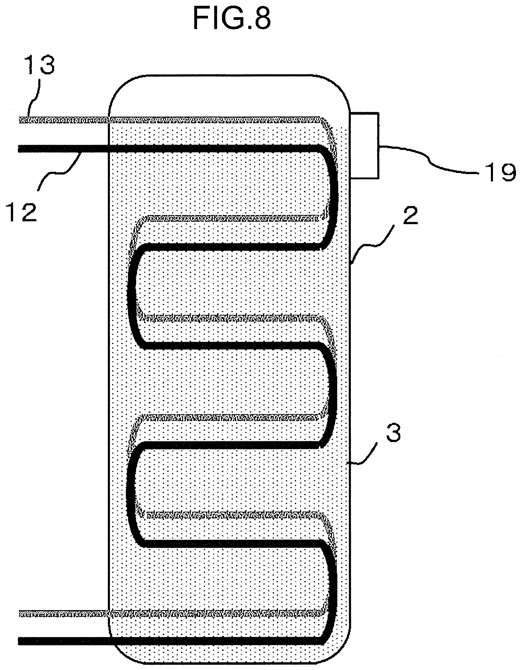

A heat storage system according to a third embodiment of the present invention is described with reference to FIG. 8. FIG. 8 is a vertical cross-sectional schematic view of the heat storage tank 2 in the third embodiment. When compared to the heat storage system according to the first embodiment, the heat storage system according to the third embodiment further includes a water level measurement device 19 instead of the temperature sensors 18. The following is a description of the heat storage system according to the third embodiment, which is given with a focus on the difference from the heat storage system according to the first embodiment.

The heat storage tank 2 included in the heat storage system according to the third embodiment is a housing holding the heat storage material 3. The heat storage material 3 held in the heat storage tank 2 is a member in which a phase change between a liquid and a solid occurs. As shown in FIG. 8, the heat storage tank 2 in the third embodiment includes the water level measurement device 19 configured to measure a water level of the heat storage material 3 in a liquid state.

When the heat storage material 3 is a latent heat storage material using latent heat resulting from a phase change between a liquid and solid, a volume of the heat storage material 3 expands/contracts in response to a temperature change. The water level measurement device 19 measures the water level of the heat storage material 3 in the liquid state, which increases/decreases depending on the volume expansion/contraction.

The control unit 7 estimates a temperature of the heat storage material 3 from the water level measured by the water level measurement device 19 based on a table representing a relationship between the water level of the heat storage material 3 in the liquid state and the temperature of the heat storage material 3 in the heat storage tank 2, and estimates the amount of heat stored in the heat storage tank 2 based on the estimated temperature. In other words, in the heat storage system according to the third embodiment, a combination of the water level measurement device 19 and the table functions as a temperature sensor configured to measure the temperature of the heat storage material 3.

In the heat storage system according to the third embodiment, by using the water level measurement device instead of the temperature sensors 18, it is also possible to further reduce situations in which an energy shortage occurs even when heat extraction has proceeded, while achieving a reduction in manufacturing cost in addition to suppressing an increase in operating cost.

### Fourth Embodiment

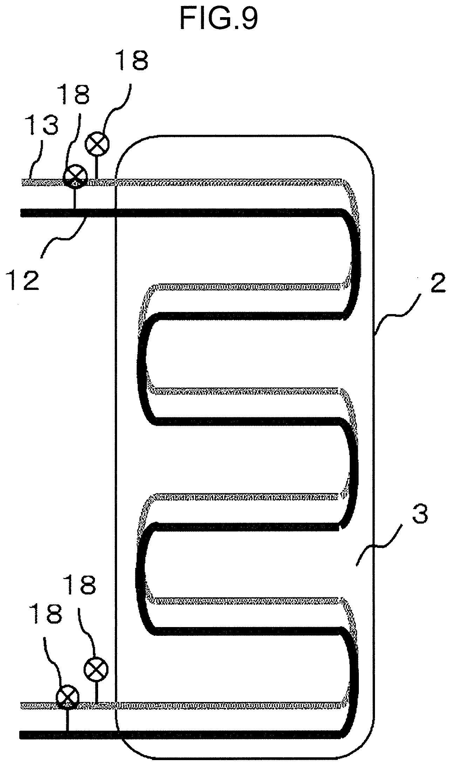

A heat storage system according to a fourth embodiment of the present invention is described with reference to FIG. 9. FIG. 9 is a vertical cross-sectional schematic view of the heat storage tank 2 in the fourth embodiment. When compared to the heat storage system according to the first embodiment, the heat storage system according to the fourth embodiment is different from the heat storage system in the temperature sensor 18. The following is a description of the heat storage system according to the fourth embodiment, which is given with a focus on the difference from the heat storage system according to the first embodiment.

The temperature sensor 18 included in the heat storage system according to the fourth embodiment is configured to measure a temperature of the heat medium in the first heat medium flow path 12 and a temperature of the heat medium in the second heat medium flow path 13, instead of being configured to measure the temperature of the heat storage material 3.

In an example illustrated in FIG. 9, at respective positions of an inlet portion through which the first heat medium flow path 12 enters the heat storage tank 2 and an outlet portion through which the first heat medium flow path 12 exits the heat storage tank 2, the temperature sensors 18 and 18 are mounted to the first heat medium flow path 12.

Further, at respective positions of an inlet portion through which the second heat medium flow path 13 enters the heat storage tank 2 and an outlet portion through which the second heat medium flow path 13 exits the heat storage tank 2, the temperature sensors 18 and 18 are mounted to the second heat medium flow path 13. In addition, a flow rate measurement device 20 configured to measure a flow rate of the heat medium in the first heat medium flow path 12 is mounted to the first heat medium flow path 12, while the flow rate measurement device 20 configured to measure a flow rate of the heat medium in the second heat medium flow path 13 is mounted to the second heat medium flow path 13.

In the heat storage system according to the fourth embodiment, the control unit 7 obtains a difference between the respective temperatures of the heat medium at the inlet portion and the outlet portion of the first heat medium flow path 12 from detection results obtained by the temperature sensors 18 and 18, obtains a flow rate of the heat medium in the first heat medium flow path 12 from a detection result obtained by the flow rate measurement device 20 for the first heat medium flow path 12, obtains a difference between the respective temperatures of the heat medium at the inlet portion and the outlet portion of the second heat medium flow path 13 from detection results obtained by the temperature sensors 18 and 18, obtains a flow rate of the heat medium in the second heat medium flow path 13 from a detection result obtained by the flow rate measurement device 20 for the second heat medium flow path 13, and calculates the heat output from the heat storage apparatus 1 based on the obtained results.

The heat storage system according to the fourth embodiment includes the temperature sensors 18 configured to measure the temperatures of the heat media instead of the temperature sensors 18, 18, and 18 configured to measure the temperature of the heat storage material 3. This configuration can reduce the number of the required temperature sensors 18. Therefore, it is possible to further reduce situations in which an energy shortage occurs even when heat extraction has proceeded, while achieving a manufacturing cost reduction in addition to suppressing an increase in operating cost.

### Fifth Embodiment

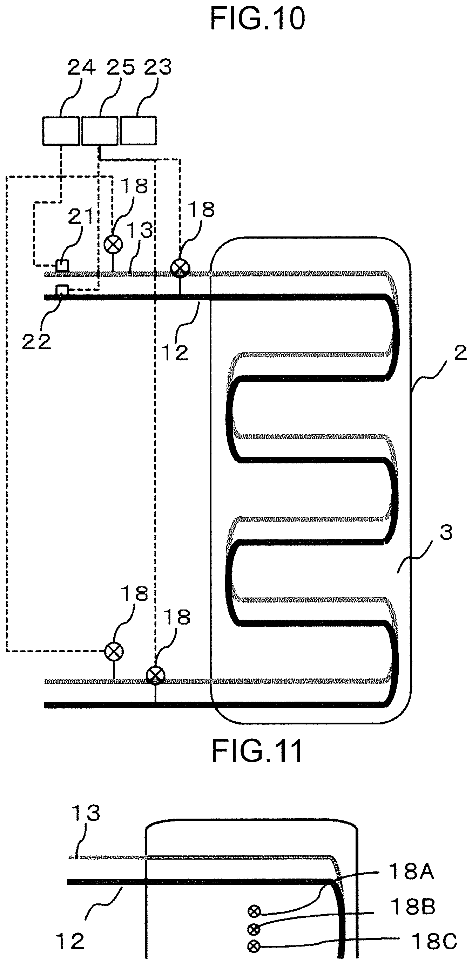

A heat storage system according to a fifth embodiment of the present invention is described with reference to FIG. 10. FIG. 10 is a vertical cross-sectional schematic view of the heat storage tank 2 in the fifth embodiment. When compared to the heat storage system according to the first embodiment, the heat storage system according to the fifth embodiment is different from the heat storage system in the heat storage amount estimation method. The following is a description of the heat storage system according to the fifth embodiment, which is given with a focus on the difference from the heat storage system according to the first embodiment.

The heat storage amount estimation method of the heat storage system according to the fifth embodiment is implemented based on an amount of heat exchange between the first heat medium and the heat storage material 3 and on an amount of heat exchange between the second heat medium and the heat storage material 3. In an example illustrated in FIG. 10, at the respective positions of the inlet portion through which the first heat medium flow path 12 enters the heat storage tank 2 and the outlet portion through which the first heat medium flow path 12 exits the heat storage tank 2, the temperature sensors 18 and 18 are mounted to the first heat medium flow path 12.

In addition, first heat medium flow rate estimation means 22 is mounted to the first heat medium flow path 12. Further, at the respective positions of the inlet portion through which the second heat medium flow path 13 enters the heat storage tank 2 and the outlet portion through which the second heat medium flow path 13 exits the heat storage tank 2, the temperature sensors 18 and 18 are mounted to the second heat medium flow path. In addition, second heat medium flow rate estimation means 21 is mounted to the second heat medium flow path 13.

As each of the first heat medium flow rate estimation means and the second heat medium flow rate estimation means, a flow rate measurement device, the number of rotations of a circulation pump, a variation with time of the amount of heat exchange, and the like can be used, but the first heat medium flow rate estimation means and the second heat medium flow rate estimation means are not limited thereto.

In the heat storage system according to the fifth embodiment, heat-storage heat exchange amount/heat storage amount estimation means 25 obtains the difference between the respective temperatures of the heat medium at the inlet portion and the outlet portion of the first heat medium flow path 12 from the detection results obtained by the temperature sensors 18 and 18, obtains the flow rate of the heat medium in the first heat medium flow path 12 using the first heat medium flow path estimation means, calculates a heat-storage heat exchange amount as the amount of heat exchange when heat is stored in the heat storage tank 2, and estimates the amount of heat stored in the heat storage tank 2 from results of estimation of the obtained heat-storage heat exchange amount.

Meanwhile, heat-output heat storage amount estimation means 24 obtains the difference between the respective temperatures of the heat medium at the inlet portion and the outlet portion of the second heat medium flow path 13 from the detection results obtained by the temperature sensors 18 and 18, obtains the flow rate of the heat medium in the second heat medium flow path 13 using the second heat medium flow rate estimation means, calculates the heat output as an amount of heat exchange when heat is used from the heat storage tank 2, and estimates the amount of heat stored in the heat storage tank 2 from results of estimation of the obtained heat output.

Any one of the heat-storage heat exchange amount/heat storage amount estimation means 25 and the heat-output heat storage amount estimation means 24 can be used to estimate the heat storage amount. However, it is possible to estimate the heat storage amounts at both times of using and storing heat by including both of the heat-storage heat exchange amount/heat storage amount estimation means 25 and the heat-output heat storage amount estimation means 24.

The heat storage system according to the fifth embodiment does not require a temperature sensor configured to measure the temperature of the heat storage material 3, thus allowing a reduction in the number of the temperature sensors 18. Therefore, it is possible to further reduce situations in which an energy shortage occurs even when heat extraction has proceeded, while achieving a manufacturing cost reduction in addition to suppressing an increase in operating cost.

### Sixth Embodiment

A heat storage system according to a sixth embodiment of the present invention is described with reference to FIG. 11. FIG. 11 is an enlarged view of a vertical cross section of the heat storage tank 2 in the sixth embodiment. The heat storage system according to the sixth embodiment is characterized by a method of arranging a heat medium flow path and temperature sensors. The following is a description of the heat storage system according to the sixth embodiment, which is given with a focus on the difference from the heat storage system according to the first embodiment.

The heat medium flow path 12 of the heat storage system according to the sixth embodiment is arranged so as to meander in the heat storage tank 2, and has a linear portion located in a horizontal direction. The plurality of temperature sensors 18, 18, and 18 are arranged at different distances in a tangential direction from a heat conductive surface of the linear portion arranged in the horizontal direction.

Thus, the temperature sensors are arranged at the different distances in the tangential direction from the linear heat conductive surface arranged in the horizontal direction. Accordingly, even when the heat storage material 3 is at a temperature equal to or higher than the melting point and in a liquid state, a temperature gradient due to influence of a buoyant force can be obtained. Therefore, it is possible to accurately estimate the heat storage amount.

It is possible to protect the heat sensors from being affected by the other conductive surfaces by arranging the plurality of temperature sensors at different distances from the closest heat conductive surface, which are smaller than distances from another heat conductive surface.

### Seventh Embodiment

A heat storage system according to a seventh embodiment of the present invention is described with reference to FIG. 12. FIG. 12 is an enlarged view of a vertical cross section of the heat storage tank 2 in the seventh embodiment. The heat storage system according to the seventh embodiment is characterized by a method of arranging a heat conductive surface and temperature sensors. The following is a description of the heat conductive surface in the seventh embodiment, which is given with a focus on the difference from the heat storage system according to the first embodiment.

In the heat storage system according to the seventh embodiment, a heat conductive surface has a portion arranged in the vicinity of the wall surface of the heat storage tank 2. In addition, the plurality of temperature sensors 18, 18, and 18 are arranged at different distances from the wall surface of the heat storage tank 2 located in the vicinity of the heat conductive surface. The temperature sensors mounted to an outer surface of the heat storage tank allows a manufacturing cost reduction.

### List of Reference Signs

- 1: heat storage apparatus,
- 2: heat storage tank,
- 3: heat storage material,
- 4: heat source machine,
- 5: heat transport means,
- 6: heat output prediction means,
- 8: information transmission means,
- 9: human sensing means,
- 10: energy generating device,
- 11: heat storage amount estimation means,
- 12: first heat medium flow path,
- 13: second heat medium flow path,
- 14: heat consuming device,
- 15: weather information collection means,
- 16: heat consumption amount recording means,
- 17: heat output recording medium,
- 18: temperature sensor,
- 19: water level measurement device,
- 20: flow rate measurement device,
- 21: second heat medium flow rate estimation means,
- 22: first heat medium flow rate estimation means,
- 23: heat exchange amount recording means,
- 24: heat-output heat storage amount estimation means,
- 25: heat-storage heat exchange amount/heat storage amount estimation means

## Claims

1. A heat storage apparatus (1), comprising:
- a heat storage tank (2) including a heat storage material (3) having heat storage property and heat dissipation property;
- a heat source machine (4) configured to generate heat to be supplied to the heat storage material (3);
- a first heat medium flow path (12), in which a first heat medium is able to flow, and which is thermally connected to each of the heat storage material (3) and the heat source machine (4);
- a circulation pump configured to circulate the first heat medium; and
- heat storage amount estimation means (11) for estimating a heat storage amount stored in the heat storage tank (2),
- wherein the heat source machine (4) is configured to generate the heat based on a result of the estimation of the heat storage amount by the heat storage amount estimation means (11),
**characterised by**:
- a second heat medium flow path (13), in which a second heat medium is able to flow, which is thermally connected to the heat storage material (3), wherein the second heat medium is able to flow through the second heat medium flow path (13) to move to a heat transport means (5) and then to one or more heat consuming devices (14);
- heat output estimation means for estimating an amount of heat exchange between the heat storage tank (2) and the second heat medium; and
- heat output/heat storage amount conversion means for estimating the heat storage amount from a result of the estimation by the heat output estimation means,
wherein the heat source machine (4) is configured to generate the heat based on results of the estimation of the heat storage amount by the heat output/heat storage amount conversion means.

2. The heat storage apparatus (1) according to claim 1,
further comprising a plurality of temperature sensors (18) arranged in the heat storage tank (2) and configured to measure a temperature of the heat storage material (3), wherein the plurality of temperature sensors (18) is arranged at positions of different distances from a heat conductive surface of the first heat medium flow path (12), at which the heat storage material (3) is in contact with the first heat medium flow path (12), and
wherein the heat source machine (4) is configured to generate the heat based on detection results from the plurality of temperature sensors (18).

3. The heat storage apparatus (1) according to claim 2,
wherein the heat storage amount estimation means (11) is for estimating the heat storage amount stored in the heat storage material (3) and calculating a temperature gradient in the heat storage tank (2) based on detection results from the plurality of temperature sensors (18),
wherein the heat source machine (4) is configured to generate the heat based on the heat storage amount estimated by the heat storage amount estimation means (11) and on the temperature gradient calculated by the heat storage amount estimation means (11).

4. The heat storage apparatus (1) according to claim 3,
wherein the first heat medium flow path (12) is arranged to meander in a vertical direction in the heat storage tank (2), and has linear portions in a horizontal direction, and
wherein the plurality of temperature sensors (18) is provided between the linear portions of the first heat medium flow path (12).

5. The heat storage apparatus (1) according to any one of claims 2 to 4,
wherein the heat conductive surface of the first heat medium flow path (12) has a portion arranged to come into contact with a surface of the heat storage tank (2), and
wherein the plurality of temperature sensors (18) is arranged on the surface of the heat storage tank (2).

6. The heat storage apparatus (1) according to claim 1,
further comprising:
heat-storage heat exchange amount estimation means for estimating an amount of heat exchange between the heat storage tank (2) and the first heat medium; and
heat-storage heat exchange amount/heat storage amount conversion means for estimating the heat storage amount from the result of the estimation of the heat-storage heat exchange amount,
wherein the heat source machine (4) is configured to generate the heat based on results of the estimation of the heat storage amount by the heat-storage heat exchange amount/heat storage amount conversion means.

7. The heat storage apparatus (1) according to claim 6,
further comprising:
first heat medium temperature detection means for measuring a temperature of the first heat medium at each of an inlet of the heat storage tank (2) and an outlet of the heat storage tank (2); and
first heat medium flow rate estimation means (22),
wherein the heat source machine (4) is configured to generate the heat based on a result of the detection by the first heat medium temperature detection means, on the heat-storage heat exchange amount estimated from a result of the estimation of the first heat medium flow rate, and based on the results of the estimation of the heat storage amount by the heat-storage heat exchange amount/heat storage amount conversion means.

8. The heat storage apparatus (1) according to claim 1,
further comprising:
second heat medium temperature detection means for measuring a temperature of the second heat medium at each of an inlet and an outlet of the heat storage tank (2); and
the second heat medium flow rate estimation means (21),
wherein the heat source machine (4) is configured to generate the heat based on a result of the detection by the second heat medium temperature detection means, on a heat output estimated from a result of the estimation of the second heat medium flow rate, and based on the result of the estimation of the heat storage amount by the heat-output heat storage amount estimation means (24).

9. The heat storage apparatus (1) according to claim 7 or 8,
further comprising heat exchange amount recording means (23) for recording a variation with time of at least one of the heat-storage heat exchange amount or the heat output,
wherein the heat source machine (4) is configured to generate the heat based on the variation with time of the heat exchange amount.

10. The heat storage apparatus (1) according to any one of claims 1 to 9, further comprising:
- heat transport means (5) for transporting heat in the second heat medium flow path (13) to the outside;
- heat consumption amount prediction means for predicting a consumed amount of the heat to be consumed in the outside; and
- heat output prediction means (6) for predicting an output of the heat to be output to the outside,
wherein the heat source machine (4) is configured to set, as a target heat storage amount, a larger one of the consumed amount predicted by the heat consumption amount prediction means and the output predicted by the heat output prediction means (6), and generate the heat such that the target heat storage amount is achieved.

11. The heat storage apparatus (1) according to claim 10,
wherein a conversion formula for setting the target heat storage amount from the output of the heat output prediction means (6) is periodically updated based on previous heat consumption data.

12. The heat storage apparatus (1) according to claim 11,
wherein the heat source machine (4) is configured to generate the heat based on a difference between the heat storage amount estimated by the heat storage amount estimation means (11) and the set target heat storage amount.

13. The heat storage apparatus (1) according to any one of claims 1 to 12,
further comprising weather information collection means (15) for collecting weather information,
wherein the heat source machine (4) is configured to generate the heat based on the weather information collected by the weather information collection means (15).

14. The heat storage apparatus (1) according to claim 13,
wherein the heat source machine (4) includes a heat pump device configured to use external air as a heat source, and is configured to estimate, from a future external air temperature predicted value collected by the weather information collection means (15), a future heat dissipation amount based on the heat storage amount stored in the heat storage tank (2), and generate the heat when a decreased amount of energy to be input to the heat source machine (4), which results from an improved efficiency obtained by generating heat during a time period of a day during which the external air temperature is high, is larger than an increase in the future heat dissipation amount resulting from the increased heat storage amount.

15. The heat storage apparatus (1) according to claim 14,
wherein the heat source machine (4) is configured to generate the heat when the decreased amount of the energy to be input to the heat source machine (4) is larger than the increase in the future heat dissipation amount resulting from the increased heat storage amount and when electricity charges are allowed to be reduced.

16. A heat storage system, comprising:
- the heat storage apparatus (1) according to claim 2; and
- a plurality of users' houses configured to consume heat; and
- a heat storage apparatus (1) thermally connected to each of the plurality of users' houses.

17. The heat storage system according to claim 16,
further comprising:
- the second heat medium flow path (13), in which the second heat medium is able to flow, is thermally connected to each of the heat storage material (3) and the plurality of users' houses;
- the heat transport means (5) is for transporting heat in the second heat medium flow path (13) to the plurality of users' houses;
- heat consumption amount prediction means for predicting a consumed amount of the heat to be consumed in the plurality of users' houses; and
- heat output prediction means (6) for predicting an output of the heat to be output to the plurality of users' houses,
- wherein the heat source machine (4) is configured to set, as a target heat storage amount, a larger one of the consumed amount predicted by the heat consumption amount prediction means and the output predicted by the heat output prediction means (6), and generate the heat such that the target heat storage amount is achieved.

18. A heat storage method for storing heat in a heat storage apparatus according to claim 1, comprising:
- measuring, by a plurality of temperature sensors (18) arranged in a heat storage tank (2), a temperature of the heat storage material (3);
- calculating a temperature gradient in the heat storage tank (2) based on respective distances between the plurality of temperature sensors (18) and a heat conductive surface of the first heat medium flow path (12), at which the heat storage material (3) is in contact with the first heat medium flow path (12), and on the measured temperature; and
- operating, based on the calculated temperature gradient, a heat source machine (4) configured to generate heat to be supplied to the heat storage material (3).

19. The heat storage method according to claim 18,
further comprising:
- predicting a consumed amount of heat to be consumed in a plurality of users' houses thermally connected to the heat storage tank (2) and configured to consume the heat;
- predicting an output of the heat to be output to the plurality of users' houses;
- setting, as a target heat storage amount, a larger one of the predicted consumed amount and the predicted output; and
- operating the heat source machine (4) such that the target heat storage amount is achieved.

## Patentansprüche

1. Wärmespeichervorrichtung (1), die Folgendes aufweist:
- einen Wärmespeichertank (2), der ein Wärmespeichermaterial (3) mit Wärmespeichereigenschaft und Wärmeabgabeeigenschaft aufweist;
- eine Wärmequellenmaschine (4), die so konfiguriert ist, dass sie dem Wärmespeichermaterial (3) zuzuführende Wärme erzeugt;
- ein erster Wärmemedium-Strömungspfad (12), auf dem ein erstes Wärmemedium strömen kann und der sowohl mit dem Wärmespeichermaterial (3) als auch mit der Wärmequellenmaschine (4) thermisch verbunden ist;
- eine Umwälzpumpe, die so konfiguriert ist, dass sie das erste Wärmemedium umwälzt; und
- eine Wärmespeichermengen-Schätzeinrichtung (11) zum Schätzen einer in dem Wärmespeichertank (2) gespeicherten Wärmespeichermenge,
- wobei die Wärmequellenmaschine (4) so konfiguriert ist, dass sie die Wärme auf der Grundlage eines Ergebnisses der Schätzung der Wärmespeichermenge durch die Wärmespeichermengen-Schätzeinrichtung (11) erzeugt, **gekennzeichnet durch**:
- einen zweiten Wärmemedium-Strömungspfad (13), auf dem ein zweites Wärmemedium strömen kann, das thermisch mit dem Wärmespeichermaterial (3) verbunden ist, wobei das zweite Wärmemedium durch den zweiten Wärmemedium-Strömungspfad (13) strömen kann, um sich zu einer Wärmetransporteinrichtung (5) und dann zu einer oder mehreren Wärmeverbrauchseinrichtungen (14) zu bewegen;
- eine Wärmeabgabe-Schätzeinrichtung zum Schätzen einer Wärmeaustauschmenge zwischen dem Wärmespeichertank (2) und dem zweiten Wärmemedium; und
- eine Wärmeabgabe/Wärmespeichermengen-Umwandlungseinrichtung zum Schätzen der Wärmespeichermenge aus einem Ergebnis der Schätzung durch die Wärmeabgabe-Schätzeinrichtung,
wobei die Wärmequellenmaschine (4) so konfiguriert ist, dass sie die Wärme auf der Grundlage der Ergebnisse der Schätzung der Wärmespeichermenge durch die Wärmeabgabe/Wärmespeichermengen-Umwandlungseinrichtung erzeugt.

2. Wärmespeichervorrichtung (1) nach Anspruch 1,
die ferner eine Vielzahl von Temperatursensoren (18) aufweist, die in dem Wärmespeichertank (2) angeordnet und zum Messen einer Temperatur des Wärmespeichermaterials (3) konfiguriert sind,
wobei die Vielzahl von Temperatursensoren (18) an Positionen mit unterschiedlichen Abständen von einer wärmeleitenden Oberfläche des ersten Wärmemedium-Strömungspfades (12) angeordnet ist, an denen das Wärmespeichermaterial (3) mit dem ersten Wärmemedium-Strömungspfad (12) in Kontakt ist, und
wobei die Wärmequellenmaschine (4) so konfiguriert ist, dass sie die Wärme auf der Grundlage von Erfassungsergebnissen von der Vielzahl von Temperatursensoren (18) erzeugt.

3. Wärmespeichervorrichtung (1) nach Anspruch 2,
wobei die Wärmespeichermengen-Schätzeinrichtung (11) zum Schätzen der in dem Wärmespeichermaterial (3) gespeicherten Wärmespeichermenge und zum Berechnen eines Temperaturgradienten in dem Wärmespeichertank (2) auf der Grundlage von Erfassungsergebnissen von der Vielzahl von Temperatursensoren (18) dient,
wobei die Wärmequellenmaschine (4) so konfiguriert ist, dass sie die Wärme auf der Grundlage der durch die Wärmespeichermengen-Schätzeinrichtung (11) geschätzten Wärmespeichermenge und des durch die Wärmespeichermengen-Schätzeinrichtung (11) berechneten Temperaturgradienten erzeugt.

4. Wärmespeichervorrichtung (1) nach Anspruch 3,
wobei der erste Wärmemedium-Strömungspfad (12) so angeordnet ist, dass er in einer vertikalen Richtung in dem Wärmespeichertank (2) mäandert, und in einer horizontalen Richtung lineare Bereiche aufweist, und
wobei die Vielzahl von Temperatursensoren (18) zwischen den linearen Bereichen des ersten Wärmemedium-Strömungspfades (12) angeordnet ist.

5. Wärmespeichervorrichtung (1) nach einem der Ansprüche 2 bis 4,
wobei die wärmeleitende Oberfläche des ersten Wärmemedium-Strömungspfades (12) einen Bereich aufweist, der so angeordnet ist, dass er mit einer Oberfläche des Wärmespeichertanks (2) in Kontakt kommt, und
wobei die Vielzahl von Temperatursensoren (18) auf der Oberfläche des Wärmespeichers (2) angeordnet ist.

6. Wärmespeichervorrichtung (1) nach Anspruch 1,
welche ferner Folgendes aufweist:
eine Wärmespeicherwärmeaustauschmengen-Schätzeinrichtung zum Schätzen einer Wärmeaustauschmenge zwischen dem Wärmespeichertank (2) und dem ersten Wärmemedium; und
eine Wärmespeicherwärmeaustauschmengen/Wärmespeichermengen-Umwandlungseinrichtung zum Schätzen der Wärmespeichermenge aus dem Ergebnis der Schätzung der Wärmespeicherwärmeaustauschmenge,
wobei die Wärmequellenmaschine (4) so konfiguriert ist, dass sie die Wärme auf der Grundlage der Ergebnisse der Schätzung der Wärmespeichermenge durch die Wärmespeicherwärmeaustauschmengen/Wärmespeichermengen-Umwandlungseinrichtung erzeugt.

7. Wärmespeichervorrichtung (1) nach Anspruch 6,
welche ferner Folgendes aufweist:
eine erste Wärmemedium-Temperaturerfassungseinrichtung zum Messen einer Temperatur des ersten Wärmemediums an jedem von einem Einlass des Wärmespeichertanks (2) und einem Auslass des Wärmespeichertanks (2); und
eine erste Wärmemediumströmungsraten-Schätzeinrichtung (22),
wobei die Wärmequellenmaschine (4) so konfiguriert ist, dass sie die Wärme auf der Grundlage eines Ergebnisses der Erfassung durch die erste Wärmemedium-Temperaturerfassungseinrichtung, auf der Wärmespeicherwärmeaustauschmenge, die aus einem Ergebnis der Schätzung der ersten Wärmemediumströmungsrate geschätzt wird, und auf der Grundlage der Ergebnisse der Schätzung der Wärmespeichermenge durch die Wärmespeicherwärmeaustauschmengen/Wärmespeichermengen-Umwandlungseinrichtung erzeugt.

8. Wärmespeichervorrichtung (1) nach Anspruch 1,
welche ferner Folgendes aufweist:
eine zweite Wärmemedium-Temperaturerfassungseinrichtung zur Messung einer Temperatur des zweiten Wärmemediums an jedem von einem Einlass und einem Auslass des Wärmespeichertanks (2); und
die zweite Wärmemediumströmungsraten-Schätzeinrichtung (21),
wobei die Wärmequellenmaschine (4) so konfiguriert ist, dass sie die Wärme auf der Grundlage eines Ergebnisses der Erfassung durch die zweite Wärmemedium-Temperaturerfassungseinrichtung, einer Wämeabgabe, die aus einem Ergebnis der Schätzung der zweiten Wärmemedium-Strömungsrate geschätzt wird, und auf der Grundlage des Ergebnisses der Schätzung der Wärmespeichermenge durch die Wärmeabgabewärmespeichermengen-Schätzeinrichtung (24) erzeugt.

9. Wärmespeichervorrichtung (1) nach Anspruch 7 oder 8,
welche ferner eine Wärmeaustauschmengen-Aufzeichnungseinrichtung (23) zum Aufzeichnen einer zeitlichen Änderung von mindestens einer von der Wärmespeicherwärmeaustauschmenge und der Wärmeabgabe aufweist,
wobei die Wärmequellenmaschine (4) so konfiguriert ist, dass sie die Wärme auf der Grundlage der zeitlichen Änderung der Wärmeaustauschmenge erzeugt.

10. Wärmespeichervorrichtung (1) nach einem der Ansprüche 1 bis 9, welche ferner Folgendes aufweist:
- eine Wärmetransporteinrichtung (5) zum Transportieren von Wärme im zweiten Wärmemedium-Strömungspfad (13) nach außen;
- eine Wärmeverbrauchsmengen-Vorhersageeinrichtung zum Vorhersagen einer verbrauchten Wärmemenge, die im Außenbereich verbraucht wird; und
- eine Wärmeabgabe-Vorhersageeinrichtung (6) zum Vorhersagen einer Abgabe der Wärme, die nach außen abgegeben wird,
wobei die Wärmequellenmaschine (4) so konfiguriert ist, dass sie als Zielwärmespeichermenge eine größere der von der Wärmeverbrauchsmengen-Vorhersageeinrichtung vorhergesagten Verbrauchsmenge und der von der Wärmeabgabe-Vorhersageeinrichtung (6) vorhergesagten Abgabe vorgibt und die Wärme so erzeugt, dass die Zielwärmespeichermenge erreicht wird.

11. Wärmespeichervorrichtung (1) nach Anspruch 10,
wobei eine Umrechnungsformel zum Vorgeben der Zielwärmespeichermenge aus der Abgabe der Wärmeabgabe-Vorhersageeinrichtung (6) auf der Grundlage früherer Wärmeverbrauchsdaten periodisch aktualisiert wird.

12. Wärmespeichervorrichtung (1) nach Anspruch 11,
wobei die Wärmequellenmaschine (4) so konfiguriert ist, dass sie die Wärme auf der Grundlage einer Differenz zwischen der von der Wärmespeichermengen-Schätzeinrichtung (11) geschätzten Wärmespeichermenge und der vorgegebenen Zielwärmespeichermenge erzeugt.

13. Wärmespeichervorrichtung (1) nach einem der Ansprüche 1 bis 12,
welche ferner eine Wetterinformationssammeleinrichtung (15) zum Sammeln von Wetterinformationen aufweist,
wobei die Wärmequellenmaschine (4) so konfiguriert ist, dass sie die Wärme auf der Grundlage der von der Wetterinformationserfassungseinrichtung (15) erfassten Wetterinformationen erzeugt.

14. Wärmespeichervorrichtung (1) nach Anspruch 13,
wobei die Wärmequellenmaschine (4) eine Wärmepumpenvorrichtung enthält, die so konfiguriert ist, dass sie Außenluft als Wärmequelle verwendet, und so konfiguriert ist, dass sie aus einem von der Wetterinformationssammeleinrichtung (15) gesammelten Vorhersagewert für die zukünftige Außenlufttemperatur eine zukünftige Wärmeabgabemenge auf der Grundlage der in dem Wärmespeichertank (2) gespeicherten Wärmespeichermenge schätzt, und die Wärme erzeugt, wenn eine verringerte Energiemenge, die der Wärmequellenmaschine (4) zugeführt werden muss, die aus einem verbesserten Wirkungsgrad resultiert, der durch die Erzeugung von Wärme während einer Zeitperiode eines Tages erhalten wird, während der die Außenlufttemperatur hoch ist, größer ist als ein Anstieg der zukünftigen Wärmeabgabemenge, die sich aus der erhöhten Wärmespeichermenge ergibt.

15. Wärmespeichervorrichtung (1) nach Anspruch 14,
wobei die Wärmequellenmaschine (4) so konfiguriert ist, dass sie die Wärme erzeugt, wenn die verringerte Energiemenge, die der Wärmequellenmaschine (4) zugeführt werden soll, größer ist als der Anstieg der zukünftigen Wärmeabgabemenge, der sich aus der erhöhten Wärmespeichermenge ergibt, und wenn die Stromkosten reduziert werden dürfen.

16. Wärmespeicheranlage, welche Folgendes aufweist:
- die Wärmespeichervorrichtung (1) nach Anspruch 2; und
- eine Vielzahl von Nutzerhäusern, die so konfiguriert sind, dass sie Wärme verbrauchen; und
- eine Wärmespeichervorrichtung (1), die thermisch mit jedem von der Vielzahl von Nutzerhäusern verbunden ist.

17. Wärmespeicheranlage nach Anspruch 16,
welche ferner Folgendes aufweist:
- der zweite Wärmemedium-Strömungspfad (13), in dem das zweite Wärmemedium strömen kann, ist thermisch mit jedem von der Wärmespeichermaterialien (3) und der Vielzahl von Nutzerhäusern verbunden;
- die Wärmetransporteinrichtung (5) dient zum Transportieren von Wärme in dem zweiten Wärmemedium-Strömungspfad (13) zu der Vielzahl von Nutzerhäusern;
- die Wärmeverbrauchsmengen-Vorhersageeinrichtung zum Vorhersagen einer verbrauchten Wärmemenge, die in der Vielzahl von Nutzerhäusern verbraucht werden soll; und
- die Wärmeabgabe-Vorhersageeinrichtung (6) zum Vorhersagen einer Abgabe der Wärme, die an die Vielzahl von Nutzerhäusern abgegeben werden soll,
- wobei die Wärmequellenmaschine (4) so konfiguriert ist, dass sie als Zielwärmespeichermenge eine größere der von der Wärmeverbrauchsmengen-Vorhersageeinrichtung vorhergesagten Verbrauchsmenge und der von der Wärmeabgabe-Vorhersageeinrichtung (6) vorhergesagten Abgabe vorgibt und die Wärme so erzeugt, dass die Zielwärmespeichermenge erreicht wird.

18. Wärmespeicherverfahren zum Speichern von Wärme in einer Wärmespeichervorrichtung nach Anspruch 1, welche Folgendes aufweist:
- Messen einer Temperatur des Wärmespeichermaterials (3) durch eine Vielzahl von Temperatursensoren (18), die in einem Wärmespeichertank (2) angeordnet sind;
- Berechnen eines Temperaturgradienten in dem Wärmespeichertank (2) auf der Grundlage der jeweiligen Abstände zwischen der Vielzahl von Temperatursensoren (18) und einer wärmeleitenden Oberfläche des ersten Wärmemedium-Strömungspfads (12), an dem das Wärmespeichermaterial (3) in Kontakt mit dem ersten Wärmemedium-Strömungspfad (12) ist, und der gemessenen Temperatur; und
- Betreiben einer Wärmequellenmaschine (4), die so konfiguriert ist, dass sie Wärme erzeugt, die dem Wärmespeichermaterial (3) zugeführt werden soll, basierend auf dem berechneten Temperaturgradienten.

19. Wärmespeicherverfahren nach Anspruch 18,
welches ferner aufweist:
- Vorhersagen einer verbrauchten Wärmemenge, die in einer Vielzahl von Nutzerhäusern verbraucht werden soll, die thermisch mit dem Wärmespeichertank (2) verbunden und so konfiguriert sind, dass sie die Wärme verbrauchen;
- Vorhersagen einer an die Vielzahl von Benutzerhäusern abzugebenden Wärmemenge;
- Vorgeben einer größeren Menge der vorhergesagten verbrauchten Menge und der vorhergesagten Abgabe als Zielwärmespeichermenge; und
- Betreiben der Wärmequellenmaschine (4) derart, dass die Zielwärmespeichermenge erreicht wird.

## Revendications

1. Appareil de stockage de chaleur (1) comprenant :
- un réservoir de stockage de chaleur (2) incluant un matériau de stockage de chaleur (3) ayant une propriété de stockage de chaleur et une propriété de dissipation de chaleur ;
- une machine source de chaleur (4) configurée pour générer de la chaleur devant être alimentée au matériau de stockage de chaleur (3) ;
- un premier trajet d'écoulement de fluide de chaleur (12) dans lequel un premier fluide de chaleur est capable de s'écouler, et qui est connecté thermiquement à chaque élément parmi le matériau de stockage de chaleur (3) et de la machine source de chaleur (4) ;
- une pompe de circulation configurée pour faire circuler le premier fluide de chaleur ; et
- un moyen d'estimation de quantité de stockage de chaleur (11) destiné à estimer une quantité de stockage de chaleur stockée dans le réservoir de stockage de chaleur (2),
- dans lequel la machine source de chaleur (4) est configurée pour générer la chaleur sur la base d'un résultat de l'estimation de la quantité de stockage de chaleur par le moyen d'estimation de quantité de stockage de chaleur (11), **caractérisé par** :
- un second trajet d'écoulement de fluide de chaleur (13) dans lequel un second fluide de chaleur est capable de s'écouler, qui est connecté thermiquement au matériau de stockage de chaleur (3), le second fluide de chaleur étant capable de s'écouler à travers le second trajet d'écoulement de fluide de chaleur (13) pour se déplacer jusqu'à un moyen caloporteur (5) et puis jusqu'à un ou plusieurs dispositifs consommateurs de chaleur (14) ;
- un moyen d'estimation de sortie de chaleur destiné à estimer une quantité d'échange de chaleur entre le réservoir de stockage de chaleur (2) et le second fluide de chaleur ; et
- un moyen de conversion sortie de chaleur/quantité stockage de chaleur destiné à estimer la quantité de stockage de chaleur à partir d'un résultat de l'estimation par le moyen d'estimation de sortie de chaleur,
dans lequel la machine source de chaleur (4) est configurée pour générer la chaleur sur la base de résultats de l'estimation de la quantité de stockage de chaleur par le moyen de conversion sortie de chaleur/ quantité de stockage de chaleur.

2. Appareil de stockage de chaleur (1) selon la revendication 1,
comprenant en outre une pluralité de capteurs de température (18) agencés dans le réservoir de stockage de chaleur (2) et configurés pour mesurer une température du matériau de stockage de chaleur (3),
dans lequel la pluralité de capteurs de température (18) sont agencés à des positions de distances différentes par rapport à une surface conductrice de chaleur du premier trajet d'écoulement de fluide de chaleur (12) à raison desquelles le matériau de stockage de chaleur (3) est en contact avec le premier trajet d'écoulement de fluide de chaleur (12), et
dans lequel la machine source de chaleur (4) est configurée pour générer la chaleur sur la base de résultats de détection provenant de la pluralité de capteurs de température (18).

3. Appareil de stockage de chaleur (1) selon la revendication 2,
dans lequel le moyen d'estimation de quantité de stockage de chaleur (11) est destiné à estimer la quantité de stockage de chaleur stockée dans le matériau de stockage de chaleur (3) et à calculer un gradient de température dans le réservoir de stockage de chaleur (2) sur la base de résultats de détection provenant de la pluralité de capteurs de température (18),
dans lequel la machine source de chaleur (4) est configurée pour générer la chaleur sur la base de la quantité de stockage de chaleur estimée par le moyen d'estimation de quantité de stockage de chaleur (11) et sur la base du gradient de température calculé par le moyen d'estimation de quantité de stockage de chaleur (11).

4. Appareil de stockage de chaleur (1) selon la revendication 3,
dans lequel le premier trajet d'écoulement de fluide de chaleur (12) est agencé en décrivant des méandres dans une direction verticale dans le réservoir de stockage de chaleur (2), et a des portions linéaires dans une direction horizontale, et
dans lequel la pluralité de capteurs de température (18) sont prévus entre les portions linéaires du premier trajet d'écoulement de fluide de chaleur (12).

5. Appareil de stockage de chaleur (1) selon l'une quelconque des revendications 2 à 4,
dans lequel la surface conductrice de chaleur du premier trajet d'écoulement de fluide de chaleur (12) a une portion agencée pour venir en contact avec une surface du réservoir de stockage chaleur (2), et
dans lequel la pluralité de capteurs de température (18) sont agencés sur la surface du réservoir de stockage de chaleur (2).

6. Appareil de stockage de chaleur (1) selon la revendication 1, comprenant en outre :
un moyen d'estimation de quantité d'échange de chaleur de stockage de chaleur destiné à estimer une quantité d'échange de chaleur entre le réservoir de stockage de chaleur (2) et le premier fluide de chaleur ; et
un moyen de conversion quantité d'échange de chaleur de stockage de chaleur/quantité de stockage de chaleur destiné à estimer la quantité de stockage de chaleur à partir du résultat de l'estimation de la quantité d'échange de chaleur de stockage de chaleur,
dans lequel la machine source de chaleur (4) est configurée pour générer la chaleur sur la base de résultats de l'estimation de la quantité de stockage de chaleur par le moyen de conversion quantité d'échange de chaleur de stockage chaleur/quantité de stockage de chaleur.

7. Appareil de stockage de chaleur (1) selon la revendication 6, comprenant en outre :
un premier moyen de détection de température de fluide de chaleur destiné à mesurer une température du premier fluide de chaleur au niveau de chacune d'une entrée du réservoir de stockage de chaleur (2) et d'une sortie du réservoir de stockage de chaleur (2) ; et
un premier moyen d'estimation de débit de fluide de chaleur (22),
dans lequel la machine source de chaleur (4) est configurée pour générer la chaleur sur la base d'un résultat de la détection par le premier moyen de détection de température de fluide de chaleur, sur la base de la quantité d'échange de chaleur de stockage de chaleur estimée à partir d'un résultat de l'estimation du premier débit de fluide de chaleur, et sur la base des résultats de l'estimation de la quantité de stockage de chaleur par le moyen de conversion quantité d'échange de chaleur de stockage de chaleur/quantité de stockage de chaleur.

8. Appareil de stockage de chaleur (1) selon la revendication 1, comprenant en outre :
un second moyen de détection de température de fluide de chaleur destiné à mesurer une température du second fluide de chaleur au niveau de chacune d'une entrée et d'une sortie du réservoir de stockage de chaleur (2) ; et
le second moyen d'estimation de débit de fluide de chaleur (21),
dans lequel la machine source de chaleur (4) est configurée pour générer la chaleur sur la base d'un résultat de la détection par le second moyen de détection de température de fluide de chaleur, sur la base d'une sortie de chaleur estimée à partir d'un résultat de l'estimation du second débit de fluide de chaleur, et sur la base du résultat de l'estimation de la quantité de stockage de chaleur par le moyen d'estimation de quantité de stockage de chaleur de sortie de chaleur (24).

9. Appareil de stockage de chaleur (1) selon la revendication 7 ou 8,
comprenant en outre un moyen d'enregistrement de quantité d'échange de chaleur (23) destiné à enregistrer une variation dans le temps de l'une au moins de la quantité d'échange de chaleur de stockage de chaleur ou de la sortie de chaleur,
dans lequel la machine source de chaleur (4) est configurée pour générer la chaleur sur la base de la variation dans le temps de la quantité d'échange de chaleur.

10. Appareil de stockage de chaleur (1) selon l'une quelconque des revendications 1 à 9,
comprenant en outre :
- un moyen caloporteur (5) destiné à transporter de la chaleur dans le second trajet d'écoulement de fluide de chaleur (13) jusqu'à l'extérieur ;
- un moyen de prédiction de quantité de consommation de chaleur destiné à prédire une quantité consommée de la chaleur devant être consommée à l'extérieur ; et
- un moyen de prédiction de sortie de chaleur (6) destiné à prédire une sortie de la chaleur devant être sortie vers l'extérieur,
dans lequel la machine source de chaleur (4) est configurée pour déterminer, à titre de quantité de stockage de chaleur cible, la plus grande parmi la quantité consommée prédite par le moyen de prédiction de quantité de consommation de chaleur et la sortie prédite par le moyen de prédiction de sortie de chaleur (6), et pour générer la chaleur de telle sorte que la quantité de stockage de chaleur cible est atteinte.

11. Appareil de stockage de chaleur (1) selon la revendication 10,
dans lequel une formule de conversion destinée à déterminer la quantité de stockage de chaleur cible à partir de la sortie du moyen de prédiction de sortie de chaleur (6) est mise à jour périodiquement sur la base de données de consommation de chaleur antérieures.

12. Appareil de stockage de chaleur (1) selon la revendication 11,
dans lequel la machine source de chaleur (4) est configurée pour générer la chaleur sur la base d'une différence entre la quantité de stockage de chaleur estimée par le moyen d'estimation de quantité de stockage de chaleur (11) et la quantité de stockage de chaleur cible déterminée.

13. Appareil de stockage de chaleur (1) selon l'une quelconque des revendications 1 à 12,
comprenant en outre un moyen de collecte d'informations météorologiques (15) destiné à collecter des informations météorologiques, dans lequel la machine source de chaleur (4) est configurée pour générer la chaleur sur la base des informations météorologiques collectées par le moyen de collecte d'informations météorologiques (15).

14. Appareil de stockage de chaleur (1) selon la revendication 13,
dans lequel la machine source de chaleur (4) inclut un dispositif de pompe à chaleur configuré pour utiliser de l'air externe à titre de source de chaleur, et est configurée pour estimer, à partir d'une valeur prédite de température d'air externe future collectée par le moyen de collecte d'informations météorologique (15), une quantité de dissipation de chaleur future sur la base de la quantité de stockage de chaleur stockée dans le réservoir de stockage de chaleur (2), et pour générer la chaleur quand une quantité diminuée d'énergie devant être entrée dans la machine source de chaleur (4), qui résulte d'une efficacité améliorée obtenue en générant de la chaleur pendant une période temporelle d'une journée pendant laquelle la température d'air externe est élevée, est plus grande qu'une augmentation dans la quantité de dissipation de chaleur future résultant de la quantité de stockage de chaleur augmentée.

15. Appareil de stockage de chaleur (1) selon la revendication 14,
dans lequel la machine source de chaleur (4) est configurée pour générer la chaleur quand la quantité diminuée de l'énergie devant être entrée dans la machine source de chaleur (4) est plus grande que l'augmentation dans la quantité de dissipation de chaleur future résultant de la quantité de stockage de chaleur augmentée et quand il est possible de réduire des charges d'électricité.

16. Système de stockage de chaleur, comprenant :
- l'appareil de stockage de chaleur (1) selon la revendication 2 ; et
- une pluralité de maisons d'utilisateurs configurées pour consommer de la chaleur ; et
- un appareil de stockage de chaleur (1) connecté thermiquement à chacune de la pluralité de maisons d'utilisateurs.

17. Système de stockage de chaleur selon la revendication 16,
comprenant en outre :
- le second trajet d'écoulement de fluide de chaleur (13) dans lequel le second fluide de chaleur est capable de s'écouler, connecté thermiquement à chaque élément parmi le matériau de stockage de chaleur (3) et la pluralité de maisons d'utilisateurs ;
- le moyen caloporteur (5) destiné à transporter de la chaleur dans le second trajet d'écoulement de fluide de chaleur (13) jusqu'à la pluralité de maisons d'utilisateurs ;
- un moyen de prédiction de quantité de consommation de chaleur destiné à prédire une quantité consommée de la chaleur devant être consommée dans la pluralité de maisons d'utilisateurs ; et
- un moyen de prédiction de sortie de chaleur (6) destiné à prédire une sortie de la chaleur devant être sortie vers la pluralité de maisons d'utilisateurs,
dans lequel la machine source de chaleur (4) est configurée pour déterminer, à titre de quantité de stockage de chaleur cible, la plus grande parmi la quantité consommée prédite par le moyen de prédiction de quantité de consommation de chaleur et la sortie prédite par le moyen de prédiction de sortie de chaleur (6), et pour générer la chaleur de telle sorte que la quantité de stockage de chaleur cible est atteinte.

18. Procédé de stockage de chaleur pour stocker de la chaleur dans un appareil de stockage de chaleur selon la revendication 1,
comprenant les étapes consistant à :
- mesurer, via une pluralité de capteurs de température (18) agencés dans un réservoir de stockage de chaleur (2), une température du matériau de stockage de chaleur (3) ;
- calculer un gradient de température dans le réservoir de stockage de chaleur (2) sur la base de distances respectives entre la pluralité de capteurs de température (18) et une surface conductrice de chaleur du premier trajet d'écoulement de fluide de chaleur (12), à raison desquelles le matériau de stockage de chaleur (3) est en contact avec le premier trajet d'écoulement de fluide de chaleur (12), et sur la base de la température mesurée ; et
- actionner, sur la base du gradient de température calculé, une machine source de chaleur (4) configurée pour générer de la chaleur devant être alimentée au matériau de stockage de chaleur (3).

19. Procédé de stockage de chaleur selon la revendication 18,
comprenant en outre les étapes consistant à :
- prédire une quantité consommée de chaleur devant être consommée dans une pluralité de maisons d'utilisateurs connectées thermiquement au réservoir de stockage de chaleur (2) et configurées pour consommer la chaleur ;
- prédire une sortie de la chaleur devant être sortie vers la pluralité de maisons d'utilisateurs ;
- déterminer, à titre de quantité de stockage de chaleur cible, la plus grande parmi la quantité consommée prédite et la sortie prédite ; et
- actionner la machine source de chaleur (4) de telle sorte que la quantité de stockage de chaleur cible est atteinte.
